# EUROPEAN PATENT APPLICATION

(11) **EP 4 506 133 A1**
(43) Date of publication of application: **12.02.2025**
(21) Application number: 23784666.2
(22) Date of filing: 27.03.2023
(51) Int. Cl.: B29B 17/02

(54) **METHOD FOR RECOVERING PLASTIC FILM**

(30) Priority: 08.04.2022 JP 2022064642
(71) Applicant: MITSUBISHI GAS CHEMICAL COMPANY, INC., Chiyoda-ku Tokyo 100-8324 (JP)
(72) Inventor: KOUNO, Kazuki, Hiratsuka-shi, Kanagawa 254-0016 (JP); NOHIRA, Itsuki, Hiratsuka-shi, Kanagawa 254-0016 (JP); KOBAYASHI, Naoko, Hiratsuka-shi, Kanagawa 254-0016 (JP)
(74) Representative: Gille Hrabal Partnerschaftsgesellschaft mbB Patentanwälte
(86) International application number: PCT/JP2023/012308
(87) International publication number: WO 2023/195376

(57) **Abstract**

Provided is a method for recovering a plastic film from a laminate. The laminate includes a plastic film (I), an inorganic layer (II) including at least one selected from the group consisting of silicon oxide, aluminum, and aluminum oxide, and a cured resin layer (III). The cured resin layer (III) is a cured product of an epoxy resin composition containing an epoxy resin and an epoxy resin curing agent, which contains an amine-based curing agent. The method includes bringing the laminate into contact with an acid aqueous solution or an alkaline aqueous solution.

## Description

### Technical Field

The present invention relates to a method for recovering a plastic film from a laminate.

### Background Art

An inorganic vapor-deposited film, which is a thermoplastic plastic film on which an inorganic substance, such as alumina or silica, is vapor-deposited, has high gas barrier properties and thus has been used for a gas barrier packaging material. The gas barrier packaging material may include a printing layer besides an inorganic vapor-deposited film. Furthermore, a packaging material in a form of a laminate film, in which an inorganic vapor-deposited film and a plastic film are laminated by interposing an adhesive layer in between the inorganic vapor-deposited film and the plastic film, has been also known.

However, in recent years, laws to promote recycling of plastic materials have been developed in various countries taking effective use of resources and energy as well as environmental pollution problems into consideration. Accordingly, a method for recovering a plastic film from a packaging material containing the plastic film has been studied.

For example, Patent Document 1 describes that a method for manufacturing a recycling substrate including a process of soaking a laminate in a basic aqueous solution, the laminate including a plastic substrate, a detachment layer containing at least one type selected from the group consisting of aluminum, aluminum oxide, and silica, and a printing layer in this order, a concentration of a basic compound and a solution temperature of the basic aqueous solution being in predetermined ranges, can provide the plastic substrate that was constituting the laminate as a recycling substrate from a printed article or laminate, which was laminated, effectively, easily, and simply.

Patent Document 2 describes a packaging material including a first substrate, a first detachment layer for recycling the first substrate by detaching the first substrate, a second substrate, and a second detachment layer for recycling the second substrate by detaching the second substrate, a composition for forming the first detachment layer containing a predetermined amount of at least one type of inorganic substance selected from the group consisting of aluminum, aluminum oxide, and silica, and a composition for forming the second detachment layer being an adhesive composition containing a predetermined polyol component and a polyisocyanate component. The description includes that the packaging material is a packaging material that has excellent substrate adhesiveness required as a packaging material, that can remove a printing layer on the inner side in addition to a printing layer on the outside of the package, that has excellent detachability of both of the two types of substrates constituting the packaging material, and that is suitable for plastic recycling.

### Citation List

### Patent Document

Patent Document 1: JP 2020-175620 A
Patent Document 2: JP 2021-107159 A

### Summary of Invention

### Technical Problem

In the disclosed technology of Patent Document 1, as a binder resin to be contained in the detachment layer, resins selected from a polyurethane resin, an acrylic resin, a polyester resin, and polyvinyl alcohol are exemplified, and as the adhesive layer, an anchor layer, a resin layer made of a molten polyolefin resin, a urethane adhesive layer, and an acrylic adhesive are exemplified. Furthermore, the composition for forming the second detachment layer described in Patent Document 2 is an adhesive composition containing a polyol component and a polyisocyanate component.

However, the laminate containing a layer made of these resins has insufficient gas barrier properties, and further has a problem of low degree of freedom in recovery conditions of a plastic film. In particular, a technology to easily recover a plastic film from a laminate in a form of laminate having two or more sheets of plastic films has been desired.

An object of the present invention is to provide a method for recovering a plastic film efficiently from a laminate including a plastic film.

### Solution to Problem

The inventors of the present invention found that the problems described above can be solved by a method including bringing a laminate including a plastic film and a predetermined layer into contact with an acid aqueous solution or an alkaline aqueous solution.

That is, the present invention relates to a method for recovering a plastic film from a laminate,
the laminate including
a plastic film (I),
an inorganic layer (II) including at least one selected from the group consisting of silicon oxide, aluminum, and aluminum oxide, and
a cured resin layer (III),
wherein the cured resin layer (III) is a cured product of an epoxy resin composition containing an epoxy resin and an epoxy resin curing agent, the epoxy resin curing agent containing an amine-based curing agent; and
the method including bringing the laminate into contact with an acid aqueous solution or an alkaline aqueous solution.

### Advantageous Effects of Invention

According to the method of the present invention, a plastic film can be recovered efficiently from a laminate including a plastic film. The method of the present invention has a high degree of freedom in recovery conditions of the plastic film and, especially, facilitates recovery of a plastic film from a laminate in a form of laminate having two or more sheets of plastic films.

### Brief Description of Drawings

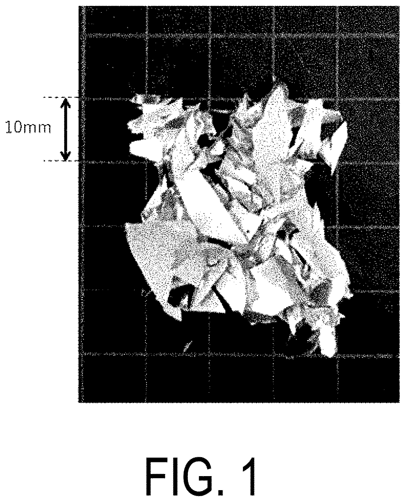

FIG. 1 is a photograph of a laminate grounded by a dry grinder in Example 32.

### Description of Embodiments

### [Method for Recovering Plastic Film]

The present invention is a method for recovering a plastic film from a laminate (hereinafter, also referred to as "method of the present invention"), the laminate including
a plastic film (I),
an inorganic layer (II) including at least one selected from the group consisting of silicon oxide, aluminum, and aluminum oxide, and
a cured resin layer (III),
where the cured resin layer (III) is a cured product of an epoxy resin composition containing an epoxy resin and an epoxy resin curing agent, the epoxy resin curing agent containing an amine-based curing agent; and
the method including bringing the laminate into contact with an acid aqueous solution or an alkaline aqueous solution.

By the method of the present invention including the configuration described above, a plastic film can be recovered efficiently from a laminate including a plastic film. The reason for this is not clear but is assumed to be as follows.

The inorganic layer (II) including at least one selected from the group consisting of silicon oxide, aluminum, and aluminum oxide (hereinafter, also simply referred to as "inorganic layer (II)") dissolves when brought into contact with an acid aqueous solution or an alkaline aqueous solution. Thus, a plastic film is easily recovered from a laminate including the inorganic layer (II). However, a laminate in a form of laminate having two or more sheets of plastic films has a problem in that recovery of the plastic film is difficult because the acid or alkaline aqueous solution is less likely to permeate between layers.

In a laminate having two or more sheets of plastic films, typically, lamination is performed by interposing a cured resin layer such as an adhesive layer in between the films. Furthermore, in a case where the laminate is a packaging material, a plurality of layers, such as a primer layer, an anchor coating layer, a coloring layer made of a coloring ink, a medium layer made of an ink containing no coloring agent, and an overcoating layer for surface protection, is included.

According to the study conducted by the inventors of the present invention, it was found that when a plastic film is recovered from a laminate including various layers such as those described above, in addition to presence of the inorganic layer (II), another layer, especially a type of the cured resin layer, affects ease in recovery of the plastic film. In other words, it was found that even for laminates each including the same inorganic layer (II) and having the same layer constitution, degree of ease in recovery of the plastic film differs due to the type of the cured resin layer.

The laminate provided in the present invention includes the cured resin layer (III), which is a cured product of an epoxy resin composition containing an epoxy resin and an epoxy resin curing agent that contains an amine-based curing agent. Since the cured resin layer (III) is a cured product of the epoxy resin composition, the cured resin layer (III) is different from a resin layer that can be dissolved in an acid or alkaline aqueous solution, a solvent, or the like. However, it is conceived that, when an epoxy resin curing agent containing an amine-based curing agent is used in the epoxy resin composition, an acid aqueous solution and an alkaline aqueous solution easily permeate in between layers, including the formed cured resin layer (III), and delamination of the cured resin layer (III) becomes easy while dissolution of the inorganic layer (II) is promoted. Unlike the disclosed technologies of Patent Documents 1 and 2, in the present invention, even in a case where the laminate is brought into contact not only with an alkaline aqueous solution but also with an acid aqueous solution, a plastic film can be recovered, which is advantageous.

In a case where the inorganic layer (II) and the cured resin layer (III) are adjacent or close, it is presumed that an acid or alkaline aqueous solution easily permeates in between layers of the laminate due to the presence of the cured resin layer (III), and as a result, recovery of a plastic film is facilitated. Note that "the inorganic layer (II) and the cured resin layer (III) are close" means that the inorganic layer (II) and the cured resin layer (III) are present by interposing one or two layers in between the inorganic layer (II) and the cured resin layer (III).

The method of the present invention will be described below.

### <Laminate>

The laminate provided in the present invention includes a plastic film (I), an inorganic layer (II) including at least one selected from the group consisting of silicon oxide, aluminum, and aluminum oxide, and a cured resin layer (III), where the cured resin layer (III) is a cured product of an epoxy resin composition containing an epoxy resin and an epoxy resin curing agent that contains an amine-based curing agent.

### (Plastic Film (I))

The plastic film (I) is only required to be a plastic film that is typically used for a packaging material or the like. Examples of the plastic film (I) include polyolefin-based films, such as those of low density polyethylene, high density polyethylene, linear low density polyethylene, and polypropylene; polyester-based films, such as those of polyethylene terephthalate, polyethylene naphthalate, and polybutylene terephthalate; polyamide-based films, such as those of nylon 6, nylon 6,6, and poly meta-xylylene adipamide (N-MXD6); polyimide-based films; biodegradable films, such as those of polylactic acid; polyacrylonitrile-based films; poly(meth)acrylic films; polystyrene-based films; polycarbonate-based films; ethylene-vinyl acetate copolymer saponified substance (EVOH)-based films, and polyvinyl alcohol-based films.

Among these, from the viewpoints of transparency, strength, thermal resistance, and tolerance to an acid or alkaline aqueous solution of the laminate, as the plastic film, at least one type selected from the group consisting of a polyolefin-based film, a polyester-based film, a polyamide-based film, and a polyimide-based film is preferred, at least one type selected from the group consisting of a polyolefin-based film and a polyester-based film is more preferred, and at least one type selected from the group consisting of a polypropylene film and a polyethylene terephthalate (PET) film is even more preferred.

The film described above may be unstretched or stretched in a uniaxial direction or biaxial direction.

The thickness of the plastic film (I) is not particularly limited and, from the viewpoints of transparency, strength, thermal resistance, and tolerance to an acid or alkaline aqueous solution used for recovery of the plastic film (I), is preferably from 5 to 300 µm, more preferably from 5 to 100 µm, and even more preferably from 5 to 50 µm. The thickness described above is a thickness for one sheet of the plastic film (I).

### (Inorganic Layer (II))

The inorganic layer (II) is a layer containing at least one type selected from the group consisting of silicon oxides, aluminum, and aluminum oxides. When the laminate has the inorganic layer (II), the plastic film (I) can be easily recovered by allowing a contact with an acid aqueous solution or an alkaline aqueous solution.

Examples of the silicon oxides include silica (SiOₓ), and examples of the aluminum oxides include alumina (Al₂Oₓ).

From the viewpoint of ease in recovery of the plastic film (I) by an acidic aqueous solution, the inorganic layer (II) is a layer made of at least one type selected from the group consisting of aluminum and aluminum oxides (alumina), and more preferably a layer made of aluminum. Furthermore, from the viewpoint of ease in recovery of the plastic film (I) by an alkaline aqueous solution, the inorganic layer (II) is preferably a layer containing silica. Examples of the layer containing silica include a layer made of silica and a layer made of silica-alumina.

Examples of the inorganic layer (II) include an inorganic layer made of a metal foil and an inorganic layer formed by a vapor deposition method. From the viewpoint of capability of imparting gas barrier properties and the like to a laminate, the inorganic layer (II) is preferably an inorganic vapor-deposited layer formed by a vapor deposition method. That is, the inorganic layer (II) is more preferably at least one type selected from the group consisting of a silica vapor-deposited layer, an aluminum vapor-deposited layer, and an alumina vapor-deposited layer and, from the viewpoint of ease in recovery of the plastic film (I) by an acidic aqueous solution, more preferably at least one type selected from the group consisting of an aluminum vapor-deposited layer and an alumina vapor-deposited layer, and even more preferably an aluminum vapor-deposited layer. From the viewpoints of ease in recovery of the plastic film (I) by an alkaline aqueous solution, the inorganic layer (II) is preferably a vapor-deposited layer containing silica, and more preferably at least one type selected from the group consisting of a silica vapor-deposited layer and a silica-alumina binary vapor-deposited layer.

The thickness of the inorganic layer (II) is not particularly limited and, from the viewpoint of ease in recovery of the plastic film (I) and from the viewpoint of imparting gas barrier properties and the like, the thickness is preferably 5 nm or more. Furthermore, in a case where the inorganic layer (II) is an inorganic vapor-deposited layer, from the viewpoints of improving transparency and flex resistance of the laminate and from the viewpoint of financial efficiency, the thickness is preferably 100 nm or less, and more preferably 50 nm or less. The thickness described above is a thickness for one layer of the inorganic layer (II).

The method for forming the inorganic layer (II) is not particularly limited, and as vapor deposition methods, examples include known vapor deposition methods including physical vapor deposition methods, such as a vacuum deposition method, a sputtering method, and an ion plating method; and chemical vapor deposition methods, such as a plasma chemical vapor deposition method, a thermal chemical vapor deposition method, and a photochemical vapor deposition method. Furthermore, the inorganic layer (II) can be formed by laminating a metal foil, such as an aluminum foil, with another layer.

### (Cured Resin Layer (III))

The cured resin layer (III) is a cured product of an epoxy resin composition containing an epoxy resin and an epoxy resin curing agent that contains an amine-based curing agent. Components contained in the epoxy resin composition will be described below.

### Epoxy Resin

The epoxy resin used in the epoxy resin composition may be a saturated or unsaturated aliphatic compound or alicyclic compound, an aromatic compound, or a heterocyclic compound. In consideration of imparting high gas barrier properties, an epoxy resin containing an aromatic ring or an alicyclic structure in the molecule is preferred.

Specific examples of the epoxy resin include at least one resin selected from an epoxy resin having a glycidylamino group derived from meta-xylylenediamine, an epoxy resin having a glycidylamino group derived from para-xylylenediamine, an epoxy resin having a glycidylamino group derived from 1,3-bis(aminomethyl) cyclohexane, an epoxy resin having a glycidylamino group derived from 1,4-bis(aminomethyl) cyclohexane, an epoxy resin having a glycidylamino group derived from diaminodiphenylmethane, an epoxy resin having a glycidylamino group and/or a glycidyloxy group derived from a para-aminophenol, an epoxy resin having a glycidyloxy group derived from bisphenol A, an epoxy resin having a glycidyloxy group derived from bisphenol F, an epoxy resin having a glycidyloxy group derived from a phenol novolac, and an epoxy resin having a glycidyloxy group derived from resorcinol. In order to improve various performance aspects such as flexibility, impact resistance, and moist heat resistance, two or more types of the epoxy resins described above may be mixed at appropriate proportions and used.

Among these described above, from the viewpoint of imparting gas barrier properties, the epoxy resin is preferably an epoxy resin having, as a main component, at least one type selected from the group consisting of an epoxy resin having a glycidylamino group derived from meta-xylylenediamine, an epoxy resin having a glycidylamino group derived from para-xylylenediamine, and an epoxy resin having a glycidyloxy group derived from bisphenol F, and is more preferably an epoxy resin having, as a main component, an epoxy resin having a glycidylamino group derived from meta-xylylenediamine.

Note that "main component" here means that other components may be included within a range that does not depart from the spirit of the present invention, and also means a component that is included in an amount of preferably from 50 to 100 mass%, more preferably from 70 to 100 mass%, and even more preferably from 90 to 100 mass%, relative to the total amount.

### Epoxy Resin Curing Agent Containing Amine-Based Curing Agent

The epoxy resin curing agent used in the epoxy resin composition contains an amine-based curing agent from the viewpoint of easily recovering the plastic film (I) from the laminate and from the viewpoint of imparting gas barrier properties.

As the amine-based curing agent, a polyamine or a modified product thereof that have been used as a known epoxy resin curing agent can be used. From the viewpoint of easily recovering the plastic film (I) from the laminate, from the viewpoint of improving adhesiveness, and from the viewpoint of imparting gas barrier properties, the amine-based curing agent is preferably a polyamine modified product, more preferably at least one selected from the group consisting of the following amine-based curing agents (i) and amine-based curing agents (ii), and even more preferably contains the amine-based curing agent (i):
(i) A reaction product of the following component (A) and the component (B):
   (A) At least one selected from the group consisting of meta-xylylenediamine and para-xylylenediamine
   (B) At least one selected from the group consisting of unsaturated carboxylic acids represented by the following General Formula (1) and derivatives thereof: 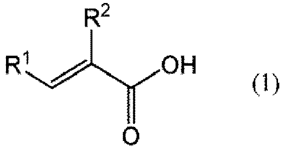
   In Formula (1), R¹ and R² each independently represent a hydrogen atom, an alkyl group having from 1 to 8 carbons, an aryl group having from 6 to 12 carbons, or an aralkyl group having from 7 to 13 carbons.
(ii) A reaction product between epichlorohydrin and at least one selected from the group consisting of meta-xylylenediamine and para-xylylenediamine.

### <<Amine-Based Curing Agent (i)>>

The amine-based curing agent (i) is a reaction product of the following component (A) and the component (B). In the present specification, the "reaction product of X and Y" includes, in addition to the reaction product (adduct) of X and Y, byproducts besides the reaction product, X and Y as unreacted raw materials, and the like.
(A) At least one type selected from the group consisting of meta-xylylenediamine and para-xylylenediamine
(B) At least one type selected from the group consisting of unsaturated carboxylic acids represented by the following General Formula (1) and derivatives thereof

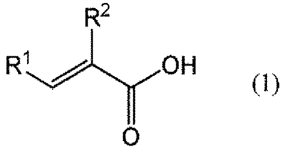

In Formula (1), R¹ and R² each independently represent a hydrogen atom, an alkyl group having from 1 to 8 carbons, an aryl group having from 6 to 12 carbons, or an aralkyl group having from 7 to 13 carbons.

The component (A) is used from the viewpoint of easily recovering the plastic film (I) form the laminate, from the viewpoints of improving adhesiveness to another layer and improving gas barrier properties. From the viewpoint of gas barrier properties, the component (A) is preferably meta-xylylenediamine. One type of the component (A) may be used alone, or two types of the components (A) may be mixed and used.

The component (B) is at least one type selected from the group consisting of unsaturated carboxylic acids represented by General Formula (1) above and derivatives thereof, and from the viewpoint of easily recovering the plastic film (I) from the laminate and from the viewpoints of improving adhesiveness to another layer and improving gas barrier properties, in General Formula (1) above, R¹ is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Furthermore, from the viewpoints the same as those described above, in General Formula (1) above, R² is preferably a hydrogen atom or an alkyl group having from 1 to 8 carbons, more preferably a hydrogen atom or an alkyl group having from 1 to 3 carbons, even more preferably a hydrogen atom or a methyl group, and yet even more preferably a hydrogen atom.

Examples of the derivatives of the unsaturated carboxylic acids represented by General Formula (1) above include esters, amides, acid anhydrides, and acid chlorides of the unsaturated carboxylic acids. The ester of the unsaturated carboxylic acid is preferably an alkyl ester, and from the viewpoint of achieving good reactivity, the alkyl has preferably from 1 to 6 carbons, more preferably from 1 to 3 carbons, and even more preferably from 1 to 2 carbons.

Examples of the unsaturated carboxylic acids represented by General Formula (1) above and the derivatives thereof include unsaturated carboxylic acids, such as acrylic acid, methacrylic acid, α-ethylacrylic acid, α-propylacrylic acid, α-isopropylacrylic acid, α-n-butylacrylic acid, α-t-butylacrylic acid, α-pentylacrylic acid, α-phenylacrylic acid, α-benzylacrylic acid, crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methyl cinnamic acid, m-methyl cinnamic acid, p-methyl cinnamic acid, and 2-octenoic acid; and esters, amides, acid anhydrides, and acid chlorides of these unsaturated carboxylic acids.

Among these described above, from the viewpoint of easily recovering the plastic film (I) from the laminate and from the viewpoints of improving adhesiveness to another layer and improving gas barrier properties, the component (B) is preferably at least one type selected from the group consisting of acrylic acid, methacrylic acid, crotonic acid, and derivatives of these, and more preferably at least one type selected from the group consisting of acrylic acid, methacrylic acid, crotonic acid, and alkyl esters of these, even more preferably at least one type selected from the group consisting of acrylic acid, methacrylic acid, and alkyl esters of these, yet even more preferably alkyl esters of acrylic acid, and yet even more preferably methyl acrylate.

One type of component (B) may be used alone, or two or more types in combination may be used.

When an unsaturated carboxylic acid, an ester, or an amide is used as the component (B), the reaction between the component (A) and the component (B) is carried out by mixing the component (A) and the component (B) under a condition of 0 to 100°C and more preferably 0 to 70°C, and then carrying out, at a condition of 100 to 300°C and preferably from 130 to 250°C, a Michael addition reaction and an amide group formation reaction by dehydration, dealcoholization, and deamination.

In this case, in the amide group formation reaction, to complete the reaction, the pressure inside a reaction device can be reduced at the final stage of the reaction as necessary. In addition, a non-reactive solvent can be used to dilute as necessary. Furthermore, a catalyst, such as a phosphite ester, can be added as a dehydrating agent or a dealcoholizing agent.

On the other hand, when an acid anhydride or an acid chloride of an unsaturated carboxylic acid is used as the component (B), the reaction is performed by mixing the component (A) and the component (B) under conditions of 0 to 150°C and preferably 0 to 100°C, and then performing Michael addition reaction and the amide group formation reaction. In this case, in the amide group formation reaction, to complete the reaction, the pressure inside a reaction device can be reduced at the final stage of the reaction as necessary. In addition, a non-reactive solvent can be used to dilute as necessary. Furthermore, a tertiary amine, such as pyridine, picoline, lutidine, or trialkylamine, can be added.

The amide group moiety formed by the reaction between the component (A) and the component (B) has high cohesive force, and thus the cured resin layer (III) formed using the epoxy resin composition containing the epoxy resin curing agent that is the reaction product obtained from the reaction between the component (A) and the component (B) exhibits high gas barrier properties and good adhesiveness.

The reaction molar ratio described above of the component (B) to the component (A), [(B)/(A)], is preferably in a range of 0.3 to 1.0. When the reaction molar ratio is 0.3 or more, a sufficient amount of the amide groups is produced in the epoxy resin curing agent, and a high level of gas barrier properties is exhibited. On the other hand, when the reaction molar ratio described above is in a range of 1.0 or less, the amount of amino groups necessary for reaction with the epoxy groups in the epoxy resin is sufficient, and excellent heat resistance and excellent solubility in organic solvents and water are exhibited.

When consideration is given particularly to improvement of gas barrier properties, the reaction molar ratio [(B)/(A)] of the component (B) to the component (A) is more preferably in a range of 0.6 to 1.0.

The amine-based curing agent described above may also be a reaction product of the component (A) and the component (B), and at least one type of compound selected from the group consisting of the following component (C), component (D), and component (E).
(C) At least one type selected from the group consisting of monovalent carboxylic acids represented by R³-COOH and derivatives thereof (R³ represents a hydrogen atom, an alkyl group that has from 1 to 7 carbons and that may have a hydroxyl group, or an aryl group having from 6 to 12 carbons)
(D) A cyclic carbonate
(E) A mono-epoxy compound having from 2 to 20 carbons

A monovalent carboxylic acid represented by R³-COOH or a derivative thereof, which is the component (C), is used as necessary from the viewpoints of reducing the reactivity between the epoxy resin curing agent and the epoxy resin and improving workability.

R³ represents a hydrogen atom, an alkyl group that has from 1 to 7 carbons and that may have a hydroxyl group, or an aryl group having from 6 to 12 carbons, and R³ is preferably an alkyl group having from 1 to 3 carbons or a phenyl group.

Examples of derivatives of the monovalent carboxylic acid represented by R³-COOH include esters, amides, acid anhydrides, and acid chlorides of the carboxylic acid. The ester of the carboxylic acid is preferably an alkyl ester, and the number of carbons of the alkyl is preferably from 1 to 6, more preferably from 1 to 3, and even more preferably 1 to 2.

Examples of the component (C) include monovalent carboxylic acids such as formic acid, acetic acid, propionic acid, butyric acid, lactic acid, glycolic acid, and benzoic acid, and derivatives thereof.

For the component (C), one type may be used alone, or two or more types may be used in combination.

The cyclic carbonate of the component (D) is used as necessary from the viewpoints of reducing the reactivity between the epoxy resin curing agent and the epoxy resin and improving workability, and is preferably a cyclic carbonate of a six-membered ring or less from the viewpoint of reactivity with the component (A). Examples include ethylene carbonate, propylene carbonate, glycerin carbonate, 1,2-butylene carbonate, vinylene carbonate, 4-vinyl-1,3-dioxolan-2-one, 4-methoxymethyl-1,3-dioxolan-2-one, and 1,3-dioxan-2-one. Among these, from the viewpoint of improving gas barrier properties, at least one type selected from the group consisting of ethylene carbonate, propylene carbonate, and glycerin carbonate is preferred.

For the component (D), one type may be used alone, or two or more types may be used in combination.

The mono-epoxy compound, which is the component (E), is a mono-epoxy compound having from 2 to 20 carbons, and is used as necessary, from the viewpoints of reducing the reactivity between the epoxy resin curing agent and the epoxy resin and improving workability. From the viewpoint of gas barrier properties, the component (E) is preferably a mono-epoxy compound having from 2 to 10 carbons and is more preferably a compound represented by the following Formula (2).

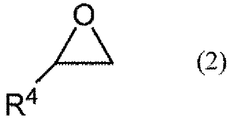

In Formula (2), R⁴ represents a hydrogen atom, an alkyl group having from 1 to 8 carbons, an aryl group, or R⁵-O-CH₂-, and R⁵ represents a phenyl group or a benzyl group.

Examples of the mono-epoxy compound represented by Formula (2) above include ethylene oxide, propylene oxide, 1,2-butylene oxide, styrene oxide, phenylglycidyl ether, and benzylglycidyl ether. For the component (E), one type may be used alone, or two or more types may be used in combination.

For a case in which the component (C), the component (D), or the component (E) is used in the amine-based curing agent described above, any one type of a compound selected from the group consisting of the component (C), the component (D), and the component (E) may be used alone, or a combination of two or more types may be used.

Note that the amine-based curing agent described above may be a reaction product that is formed by reacting, in addition to the components (A) to (E), another component within a scope that does not hinder the effect of the present invention. Examples of the other component referred to here include aromatic dicarboxylic acids or derivatives thereof.

However, the used amount of the "other component" is preferably 30 mass% or less, more preferably 10 mass% or less, and even more preferably 5 mass% or less, of the total amount of the reaction components constituting the amine-based curing agent described above.

The reaction product of the component (A) and the component (B) and the at least one type of compound selected from the group consisting of the component (C), the component (D), and the component (E) is produced by using at least one type of compound selected from the group consisting of the component (C), the component (D), and the component (E) in combination with the component (B) and reacting this combination with the component (A), which is a polyamine compound. The reaction may be performed by adding the components (B) to (E) in any order and reacting with the component (A), or by mixing the components (B) to (E) and then reacting the mixture with the component (A).

The reaction between the component (A) and the component (C) can be carried out under the same conditions as those of the reaction between the component (A) and the component (B). In a case where the component (C) is used, the component (B) and the component (C) may be mixed and then reacted with the component (A), or the component (A) and the component (B) may be first reacted and then further reacted with the component (C).

On the other hand, in a case in which the component (D) and/or the component (E) is used, preferably, the component (A) and the component (B) are first reacted, and then further reacted with the component (D) and/or the component (E).

The reaction between the component (A) and the component (D) and/or the component (E) is carried out by mixing the component (A) and the component (D) and/or the component (E) in a condition of 25 to 200°C, and then implementing an addition reaction in a condition of 30 to 180°C, and preferably from 40 to 170°C. Furthermore, as necessary, a catalyst such as sodium methoxide, sodium ethoxide, and potassium t-butoxide can be used.

When the reaction described above is to be carried out, as necessary, the component (D) and/or the component (E) may be melted or diluted with a non-reactive solvent and used to facilitate the reaction.

Also in a case where the amine-based curing agent described above is a reaction product of the component (A) and the component (B), and at least one type of compound selected from the group consisting of the component (C), the component (D), and the component (E), the reaction molar ratio [(B)/(A)] of the component (B) to the component (A) is, for the same reason as described above, preferably in a range of 0.3 to 1.0, and more preferably in a range of 0.6 to 1.0. Meanwhile, the reaction molar ratio [{ (C) + (D) + (E)}/(A)] of the component (C), the component (D), and the component (E) to the component (A) is preferably in a range of 0.05 to 3.1, more preferably in a range of 0.07 to 2.5, and even more preferably in a range of 0.1 to 2.0.

However, from the viewpoint of improving gas barrier properties, the reaction molar ratio [{(B) + (C) + (D) + (E)}/(A)] of the components (B) to (E) to the component (A) is preferably in a range of 0.35 to 2.5, and more preferably in a range of 0.35 to 2.0.

From the viewpoint of easily recovering the plastic film (I) from the laminate and from the viewpoint of imparting gas barrier properties, the amine-based curing agent (i) is more preferably a reaction product obtained by reacting only the component (A) and the component (B).

### (Amine-Based Curing Agent (ii))

The amine-based curing agent (ii) is a reaction product between epichlorohydrin and at least one type selected from the group consisting of meta-xylylenediamine and para-xylylenediamine.

The amine-based curing agent (ii) preferably contains a compound represented by General Formula (3) below as a main component. Here, "main component" refers to a component having a content of 50 mass% or more when the total constituent components in the amine-based curing agent (ii) is 100 mass%.

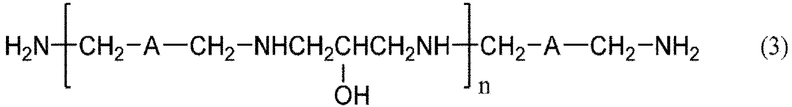

In Formula (3), A is a 1,3-phenylene group or a 1,4-phenylene group. n is 1 to 12.

A is more preferably a 1,3-phenylene group.

The content of the compound represented by General Formula (3) above in the amine-based curing agent (ii) is preferably 60 mass% or more, more preferably 70 mass% or more, even more preferably 75 mass% or more, and yet even more preferably 85 mass% or more. Furthermore, the upper limit is 100 mass%.

From the viewpoint of achieving good curing performance as a curing agent, it is preferable that the proportion of a compound with n = 1 among the compounds represented by General Formula (3) above is large. The content of the compound represented by General Formula (3) above with n = 1 in the amine-based curing agent (ii) is preferably 15 mass% or more, more preferably 20 mass% or more, and even more preferably 25 mass% or more. Furthermore, the upper limit is 100 mass%.

The content of the compound represented by General Formula (3) above in the amine-based curing agent (ii) and the composition of the compound represented by General Formula (3) above can be determined by GC analysis and gel permeation chromatography (GPC) analysis.

The amine-based curing agent (ii) can be formed by subjecting epichlorohydrin and at least one type selected from the group consisting of meta-xylylenediamine and para-xylylenediamine to an addition reaction by a common method.

From the viewpoint of easily recovering the plastic film (I) from the laminate and from the viewpoint of imparting gas barrier properties, the total content of the amine-based curing agent (i) and the amine-based curing agent (ii) in the amine-based curing agent is preferably 50 mass% or more, more preferably 70 mass% or more, even more preferably 80 mass% or more, and yet even more preferably 90 mass% or more, and 100 mass% or less.

The epoxy resin curing agent may contain a curing agent component other than an amine-based curing agent, but from the viewpoint of easily recovering the plastic film (I) from the laminate and from the viewpoints of improving adhesiveness to another layer and improving gas barrier properties, the content of the amine-based curing agent is preferably high. From the viewpoints described above, the content of the amine-based curing agent in the epoxy resin curing agent is preferably 50 mass% or more, more preferably 70 mass% or more, even more preferably 80 mass% or more, and yet even more preferably 90 mass% or more, and 100 mass% or less.

For the content ratio of the epoxy resin curing agent to the epoxy resin in the epoxy resin composition, from the viewpoint of easily recovering the plastic film (I) from the laminate and from the viewpoints of improving adhesiveness to another layer and improving gas barrier properties, the ratio of the active hydrogen number in the epoxy resin curing agent to the number of epoxy groups in the epoxy resin (active hydrogen number in epoxy resin curing agent/number of epoxy groups in epoxy resin) is preferably in a range of 0.2 to 12.0, and more preferably in a range of 0.2 to 10.0, and from the viewpoints of facilitating delamination of the cured resin layer (III) from the laminate when the cured resin layer (III) is brought into contact with an acid or alkaline aqueous solution and more easily recovering the plastic film (I), the ratio is more preferably in a range of 0.2 to 8.0, even more preferably in a range of 0.2 to 5.0, yet even more preferably in a range of 0.5 to 5.0, and yet even more preferably in a range of 0.8 to 5.0.

From the viewpoint of improving adhesiveness between the resulting cured resin layer (III) and another layer, the epoxy resin composition may further contain a coupling agent. Examples of the coupling agent include a silane coupling agent, a titanate-based coupling agent, and an aluminate-based coupling agent. A silane coupling agent is preferable from the viewpoint of improving adhesiveness to another layer.

Examples of the silane coupling agent include a silane coupling agent having a vinyl group, a silane coupling agent having an amino group, a silane coupling agent having an epoxy group, a silane coupling agent having a (meth)acryl group, and a silane coupling agent having a mercapto group. Among these, from the viewpoint of improving adhesiveness between the resulting cured resin layer (III) and another layer, the silane coupling agent is preferably at least one type selected from the group consisting of a silane coupling agent having an amino group and a silane coupling agent having an epoxy group.

When a coupling agent is used, the content of the coupling agent in the epoxy resin composition is preferably from 0.1 to 10 parts by mass, and more preferably from 1 to 8 parts by mass, per 100 parts by mass of the epoxy resin curing agent.

The epoxy resin composition may contain an organic solvent, and the organic solvent is preferably a non-reactive solvent. Specific examples of the organic solvent preferably include a protic polar solvent, such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol, as well as ethyl acetate, butyl acetate, methyl isobutyl ketone, and toluene; one type of these may be used, or two or more types may be used.

Among these described above, from the viewpoint of improving drying speed, at least one type selected from the group consisting of methanol, ethanol, and ethyl acetate is preferred.

When the epoxy resin composition contains an organic solvent, the solid content concentration of the epoxy resin composition is not particularly limited and, from the viewpoint of coatability, is preferably 10 mass% or more, more preferably 20 mass% or more, and even more preferably 30 mass% or more. Furthermore, from the viewpoint of coatability and from the viewpoint of adjusting the thickness of the resulting cured resin layer (III) to a desired thickness, the solid content concentration is preferably 60 mass% or less, more preferably 50 mass% or less, and even more preferably 40 mass% or less.

The epoxy resin composition may contain an additive, such as a thermosetting resin, a wetting agent, a tackifier, an antifoaming agent, a curing accelerator, an antirust additive, a pigment, and an oxygen scavenger, as necessary within a range that does not impair the effects of the present invention.

From the viewpoint of exhibiting an even higher adhesiveness, the total content of the additives described above in the epoxy resin composition relative to 100 parts by mass of the total amount of the epoxy resin and the epoxy resin curing agent is preferably 20.0 parts by mass or less, and more preferably from 0.001 to 15.0 parts by mass.

However, from the viewpoint of achieving the effects of the present invention, the total content of the epoxy resin and the epoxy resin curing agent in the solid content of the epoxy resin composition is preferably 60 mass% or more, more preferably 70 mass% or more, even more preferably 80 mass% or more, and yet even more preferably 85 mass% or more, and the upper limit is 100 mass%. The "solid content of the epoxy resin composition" means components excluding the water and organic solvent in the epoxy resin composition.

From the viewpoint of exhibiting an even higher adhesiveness of the resulting cured resin layer (III), a content of a lubricant is preferably small in the epoxy resin composition. Specifically, the content of the lubricant in the epoxy resin composition is preferably less than 10 parts by mass, more preferably less than 5 parts by mass, even more preferably less than 2 parts by mass, yet even more preferably less than 1 part by mass, yet even more preferably less than 0.1 parts by mass, yet even more preferably less than 0.01 parts by mass, and yet even more preferably 0 parts by mass, relative to the 100 parts by mass total of the epoxy resin and the epoxy resin curing agent in the epoxy resin composition.

The lubricant described above contains, in addition to a known component as a lubricant, an unsaturated fatty acid amide having from 14 to 24 carbons, such as erucamide and oleamide.

From the viewpoint of exhibiting an even higher adhesiveness of the resulting cured resin layer (III), a content of a filler, such as an organic or inorganic powder or an organic or inorganic fiber, is preferably small in the epoxy resin composition. Specifically, the content of the filler in the epoxy resin composition is preferably less than 10 parts by mass, more preferably less than 5 parts by mass, even more preferably less than 2 parts by mass, yet even more preferably less than 1 part by mass, yet even more preferably less than 0.1 parts by mass, yet even more preferably less than 0.01 parts by mass, and yet even more preferably 0 parts by mass, relative to the 100 parts by mass total of the epoxy resin and the epoxy resin curing agent in the epoxy resin composition.

### (Preparation of Epoxy Resin Composition)

The epoxy resin composition can be prepared, for example, by blending predetermined amounts of the epoxy resin, the epoxy resin curing agent containing the amine-based curing agent, additives that are used as necessary, and the organic solvent, and then stirring and mixing using a known method and apparatus. Note that the epoxy resin and the epoxy resin curing agent may be mixed immediately before the use and used.

### (Formation of Cured Resin Layer (III))

The cured resin layer (III) is formed by using the epoxy resin composition. The epoxy resin composition is a thermosetting resin composition containing the epoxy resin and the epoxy resin curing agent and, for example, in the production of the laminate, the cured resin layer (III) is formed by applying an epoxy resin composition on a plastic film (I) or another layer, and optionally removing an organic solvent, then adhering another plastic film or a layer, and then curing. The method for curing the epoxy resin composition is not particularly limited, and curing is implemented by a known method at a temperature and concentration of the epoxy resin composition sufficient for formation of the cured product thereof.

Details of the method for forming the cured resin layer (III) will be described below in "Method for Manufacturing Laminate".

The thickness of the cured resin layer (III) is preferably from 0.05 to 20 µm, more preferably from 0.1 to 15 µm, even more preferably from 0.2 to 10 µm, yet even more preferably from 0.5 to 7 µm, yet even more preferably from 1 to 5 µm, and yet even more preferably from 2 to 5 µm, from the viewpoint of improving adhesiveness and from the viewpoint of easily recovering the plastic film (I) from the laminate. The thickness described above is a thickness for one layer of the cured resin layer (III).

### (Layer Constitution of Laminate)

The laminate used in the present invention is only required to have at least one each of the plastic film (I), the inorganic layer (II), and the cured resin layer (III), and may have two or more of each of these. In a case where two or more of the plastic films (I), the inorganic layers (II), and/or the cured resin layers (III) are included, the type and the thickness of the plurality of the plastic films (I) may be the same or different. The same applies to the type and the thickness of the inorganic layer (II) and the cured resin layer (III).

Note that, in a case where two or more plastic films (I) are contained, from the viewpoint of ease in recovery of the plastic films (I), the resins constituting all the plastic films (I) are preferably resins of the same type.

The order of laminating the plastic film (I), the inorganic layer (II), and the cured resin layer (III) is not particularly limited but the laminate preferably includes two or more plastic films (I). Furthermore, from the viewpoint of easily recovering the plastic film (I) from the laminate, the inorganic layer (II) and the cured resin layer (III) are preferably laminated in between any two sheets of the plastic films (I).

The laminate may include a layer besides the plastic film (I), the inorganic layer (II), and the cured resin layer (III). Examples of the layer include a primer layer, an anchor coating layer, an overcoating layer, an ink layer, a thermoplastic resin layer other than the plastic film (I), a cured resin layer which is a cured product of a photocurable or thermosetting resin composition, and an adhesive layer other than the cured resin layer (III), and one type or two or more types of these can be contained.

Among these described above, for example, in a case where a laminate originated from a packaging material is used, examples of the laminate further include a laminate including an ink layer. Examples of the ink layer include a coloring layer made of an ink containing a coloring agent, and a medium layer made of an ink containing no coloring agent.

The coloring layer in the ink layer can be formed by, for example, using a printing ink containing a coloring agent, such as a pigment, and a binder resin. The medium layer can be formed by using a printing ink containing no coloring agent (medium).

The ink layer may be formed on an entire face of the laminate or may be formed in some parts of the laminate. Furthermore, the ink layer may have characters, logos, patterns, and the like.

The thickness of the ink layer is typically from 0.05 to 20 µm, preferably from 0.1 to 15 µm, more preferably from 0.2 to 5 µm, and even more preferably from 0.4 to 2 µm. The thickness described above is a thickness for one layer of the ink layer.

The ink layer is preferably formed by a known printing method using a printing ink. Examples of the printing method include a gravure printing method, a flexographic printing method, and a screen printing method. From the viewpoint of productivity, a gravure printing method is preferred.

Examples of the laminate including two or more plastic films (I) include a laminate including the plastic film (I), the inorganic layer (II), the cured resin layer (III), and the plastic film (I) in this order.

Examples of preferred layer constitution of the laminate including two or more plastic films (I) include the following. In the description below, description I/II/III means that the layers are laminated in the order of I, II, and III from the top.
(1): Plastic film (I)/inorganic layer (II)/cured resin layer (III)/plastic film (I)
(2): Plastic film (I)/inorganic layer (II)/coloring layer/medium layer/cured resin layer (III)/plastic film (I)
(3): Plastic film (I)/coloring layer/medium layer/cured resin layer (III)/inorganic layer (II)/plastic film (I)
(4): Plastic film (I)/adhesive layer/cured resin layer (III)/inorganic layer (II)/plastic film (I)
(5): Plastic film (I)/cured resin layer (III)/adhesive layer/inorganic layer (II)/plastic film (I)
(6): Plastic film (I)/inorganic layer (II)/coloring layer/medium layer/cured resin layer (III)/adhesive layer/plastic film (I)
(7): Plastic film (I)/coloring layer/medium layer/adhesive layer/cured resin layer (III)/inorganic layer (II)/plastic film (I)
(8): Plastic film (I)/inorganic layer (II)/cured resin layer (III)/inorganic layer (II)/plastic film (I)
(9): Plastic film (I)/inorganic layer (II)/coloring layer/medium layer/cured resin layer (III)/inorganic layer (II)/plastic film (I)
(10): Plastic film (I)/inorganic layer (II)/adhesive layer/cured resin layer (III)/inorganic layer (II)/plastic film (I)

However, the layer constitution of the laminate is not limited by those described above and may include a primer layer, an anchor coating layer, an overcoating layer, and the like in between any layers among the layers described above. Furthermore, the layer constitution is not limited to the constitutions of (8) to (10), two or more inorganic layers (II) may be included, and two or more cured resin layers (III) may be included.

From the viewpoint of easily recovering the plastic film (I) from the laminate, the laminate preferably has a constitution in which the inorganic layer (II) and the cured resin layer (III) are adjacent or present by interposing one or two layers therebetween, the laminate more preferably has a constitution in which the inorganic layer (II) and the cured resin layer (III) are adjacent or present by interposing only one layer therebetween, and even more preferably the inorganic layer (II) and the cured resin layer (III) are adjacent.

The laminate may be in a film form. Furthermore, as long as the laminate has a laminate structure including the plastic film (I), the inorganic layer (II), and the cured resin layer (III), the laminate may have a form other than a film form, such as a bag, a bottle, or a lid of these, a sealing material, or a cylindrical plastic label.

### <Method for Manufacturing Laminate>

The method for producing the laminate is not particularly limited, and a known method can be used.

For example, an example of a method for manufacturing a laminate having a constitution of the aforementioned (1): plastic film (I)/inorganic layer (II)/cured resin layer (III)/plastic film (I) is a method including forming an inorganic layer (II) on one face of any one of the plastic films (I) by the method described above, applying the epoxy resin composition in a desired thickness on a face on the inorganic layer (II) side, adhering the other plastic film (I) immediately to the coated face by nip rolls or the like, and then forming a cured resin layer (III) by curing the epoxy resin composition by the method described above. Note that, by using a film in which an inorganic layer (II) is formed in advance on the plastic film (I), a cured resin layer (III) may be formed on the inorganic layer (II) face.

Examples of the application method for applying the epoxy resin composition include bar coating, Meyer bar coating, air knife coating, gravure coating, reverse gravure coating, micro gravure coating, micro reverse gravure coating, die coating, slot die coating, vacuum die coating, dip coating, spin coating, roll coating, spray coating, and coating with a brush. Among these, bar coating, roll coating, or spray coating is preferred, and gravure coating, reverse gravure coating, micro gravure coating, or micro reverse gravure coating is industrially preferred.

After the epoxy resin composition has been applied by coating, a process (drying process) of volatilizing the solvent is implemented as necessary. Conditions in the drying process can be selected as appropriate, and the drying can be performed, for example, at a drying temperature of 40 to 180°C and a drying time of 5 to 180 seconds.

After the drying process has been performed, the epoxy resin composition is cured to form a cured resin layer (III). The curing temperature can be selected, for example, in a range of 10 to 140°C, and is preferably in a range of 10 to 80°C. Furthermore, the curing time can be selected, for example, in a range of 1 minute to 7 days, and is preferably in a range of 2 to 100 hours.

### <Acid Aqueous Solution or Alkaline Aqueous Solution>

The method of the present invention includes bringing the laminate into contact with an acid aqueous solution or an alkaline aqueous solution.

The acid used for the acid aqueous solution may be any inorganic acid or organic acid.

Examples of the inorganic acid include hydrochloric acid, sulfuric acid, nitric acid, and phosphoric acid.

Examples of the organic acid include a carboxylic acid compound, a sulfonic acid compound, and an organic phosphoric acid compound. From the viewpoint of easily recovering the plastic film (I) from the laminate, at least one type selected from the group consisting of a carboxylic acid compound and a sulfonic acid compound is preferred. Examples of the carboxylic acid compound include formic acid, acetic acid, citric acid, malic acid, lactic acid, adipic acid, sebacic acid, stearic acid, maleic acid, succinic acid, tartaric acid, fumaric acid, and gluconic acid. Examples of the sulfonic acid compound include methanesulfonic acid, ethanesulfonic acid, and p-toluenesulfonic acid.

One type or two or more types of the acids described above can be used.

Among these described above, from the viewpoint of easily recovering the plastic film (I) from the laminate and from the viewpoint of financial efficiency, the acid used for the acid aqueous solution is preferably at least one type selected from the group consisting of hydrochloric acid and carboxylic acid compound, more preferably at least one type selected from the group consisting of hydrochloric acid, acetic acid, citric acid, and lactic acid, even more preferably at least one type selected from the group consisting of hydrochloric acid, acetic acid, and lactic acid, and yet even more preferably at least one type selected from the group consisting of acetic acid and lactic acid.

The concentration of the acid in the acid aqueous solution is preferably from 0.1 to 4 N, more preferably from 0.2 to 3 N, and even more preferably from 0.5 to 2 N, from the viewpoint of easily recovering the plastic film (I) from the laminate and from the viewpoint of suppressing deterioration of the plastic film (I).

The pH at 25°C of the acid aqueous solution is preferably 6.0 or less, more preferably 5.0 or less, even more preferably 4.0 or less, and yet even more preferably 3.0 or less, from the viewpoint of easily recovering the plastic film (I) from the laminate, and is preferably 0.2 or more, more preferably 0.5 or more, even more preferably 1.0 or more, and yet even more preferably 1.8 or more, from the viewpoint of easily recovering the plastic film (I) from the laminate and from the viewpoint of suppressing deterioration of the plastic film (I).

The alkaline compound used in the alkaline aqueous solution may be any inorganic alkaline compound or organic alkaline compound.

Examples of the inorganic alkaline compound include alkali metal hydroxides, such as lithium hydroxide, sodium hydroxide, and potassium hydroxide; alkali metal carbonates or bicarbonate, such as lithium carbonate, lithium hydrogen carbonate, potassium carbonate, potassium hydrogen carbonate, sodium carbonate, and sodium hydrogen carbonate; and ammonia.

Examples of the organic alkaline compound include amine compounds and tetraalkylammonium hydroxides. Examples of the amine compound include alkanolamines, alkylamines, and aralkylamines, and each of these preferably has 10 or less, and more preferably 8 or less carbons, from the viewpoint of water solubility.

Examples of the alkanolamine include mono-, di-, or trimethanolamine and mono-, di-, or triethanolamine. Examples of the alkylamine include methylamine, dimethylamine, ethylamine, diethylamine, N-methylethylamine, propylamine, and butylamine. Examples of the aralkylamine include benzylamine.

Examples of the tetraalkylammonium hydroxide include tetramethylammonium hydroxide and tetraethylammonium hydroxide.

One type or two or more types of the alkaline compounds described above can be used.

Among these described above, from the viewpoint of easily recovering the plastic film (I) from the laminate and from the viewpoint of financial efficiency, the alkaline compound used in the alkaline aqueous solution is preferably an inorganic alkaline compound, more preferably an alkali metal hydroxide, and even more preferably at least one type selected from the group consisting of sodium hydroxide and potassium hydroxide.

From the viewpoint of easily recovering the plastic film (I) from the laminate and from the viewpoint of suppressing deterioration of the plastic film (I), the concentration of the alkaline compound in the alkaline aqueous solution is preferably from 0.1 to 20 mass%, more preferably from 1 to 15 mass%, and even more preferably from 2 to 10 mass%, although it also varies depending on the type of the alkaline compound.

The pH at 25°C of the alkaline aqueous solution is preferably 8.0 or more, more preferably 9.0 or more, and even more preferably 10.0 or more, from the viewpoint of easily recovering the plastic film (I) from the laminate, and is preferably 15.0 or less from the viewpoint of suppressing deterioration of the plastic film (I).

From the viewpoint of easily recovering the plastic film (I) from the laminate, especially in a case where the inorganic layer (II) is a layer made of at least one type selected from the group consisting of aluminum and aluminum oxides (alumina), the method of the present invention preferably includes bringing the laminate into contact with the acid aqueous solution, and more preferably includes soaking the laminate in the acid aqueous solution.

Examples of the method of bringing the laminate into contact with the acid aqueous solution or the alkaline aqueous solution include soaking, spraying, and flow casting; however, from the viewpoint of easily recovering the plastic film (I) from the laminate, soaking is preferred.

The temperature of the aqueous solution at the time of bringing the laminate into contact with the acid aqueous solution or the alkaline aqueous solution is not particularly limited; however, from the viewpoint of easily recovering the plastic film (I) from the laminate and from the viewpoint of suppressing deterioration of the plastic film (I), the temperature is preferably from 5 to 90°C, more preferably from 5 to 70°C, even more preferably from 10 to 60°C, and even more preferably from 15 to 45°C.

The time for bringing the laminate into contact with the acid aqueous solution or the alkaline aqueous solution is also not particularly limited; however, from the viewpoint of recovery efficiency of the plastic film (I), the time is preferably from 30 minutes to 7 days, and more preferably from 1 hour to 5 days.

From the viewpoint of easily recovering the plastic film (I) from the laminate and from the viewpoint of financial efficiency, the used amount of the acid aqueous solution or the alkaline aqueous solution at the time when the laminate is brought into contact the acid aqueous solution or the alkaline aqueous solution is preferably from 2 to 2000 times, more preferably from 2 to 500 times, and even more preferably from 2 to 100 times, the mass of the laminate.

The laminate after being brought into contact with the acid aqueous solution or the alkaline aqueous solution or the plastic film (I) delaminated from the laminate can be recovered by water-washing and drying.

Note that, in the method of the present invention, it is decided that the recovery of the plastic film being easy in a case where a film can be separated from one or more other layer(s) (preferably the inorganic layer (II)) when the laminate includes only one sheet of the plastic film (I) and in a case where plastic films (I) can be separated from each other when the laminate includes two or more of the plastic films (I).

Another layer may remain on the separated plastic film (I) described above, and in this case, the method of the present invention may further include removing such another layer. For example, in a case where the ink layer remains on the plastic film (I), the ink layer can be easily removed by a known de-inking treatment.

### Examples

Next, the present invention will be described specifically with reference to examples. However, the present invention is not limited in any way by these examples.

### Production Example 1 (Preparation of Epoxy Resin Curing Agent Solution A Containing Amine-Based Curing Agent)

A reaction vessel was charged with 1 mol of meta-xylylenediamine (MXDA). The temperature was raised to 60°C under a nitrogen stream, and 0.93 mol of methyl acrylate was added dropwise over 1 hour. The temperature was increased to 165°C while generated methanol was distilled off, and the temperature was then maintained at 165°C for 2.5 hours, and thus an amine-based curing agent was produced. In this, methanol was added dropwise over 1.5 hours, after which 3-aminopropyltriethoxysilane ("KBE-903", available from Shin-Etsu Chemical Co., Ltd.), which was a silane coupling agent, was added, and an epoxy resin curing agent solution A containing 62.2 mass% of the amine-based curing agent, 2.8 mass% of 3-aminopropyltriethoxysilane, and 35 mass% of methanol was obtained.

### Production Example 2 (Preparation of Epoxy Resin Curing Agent Solution B Containing Amine-Based Curing Agent)

A reaction vessel was charged with 1 mol of meta-xylylenediamine (MXDA). The temperature was raised to 60°C under a nitrogen stream, and 0.93 mol of methyl acrylate was added dropwise over 1 hour. The temperature was increased to 165°C while generated methanol was distilled off, and the temperature was then maintained at 165°C for 2.5 hours, and thus an amine-based curing agent was produced. In this, ethanol for industrial use ("Econol H", available from Imazu Chemical Co., Ltd.) was added dropwise over 1.5 hours, after which 3-aminopropyltriethoxysilane ("KBE-903", available from Shin-Etsu Chemical Co., Ltd.), which was a silane coupling agent, was added, and a solution containing 62.2 mass% of the amine-based curing agent, 2.8 mass% of 3-aminopropyltriethoxysilane, and 35 mass% of ethanol was prepared.

35.2 g of ethanol and 42.6 g of ethyl acetate, as a diluting solvent, and 21.2 g of the solution described above were added and stirred. To this, 1 g of erucamide was added and stirred, and thus an epoxy resin curing agent solution B containing a solid content concentration of 14.7 mass% was obtained.

### Production Example 3 (Preparation of Epoxy Resin Composition A)

1.98 g of methanol and 3.25 g of ethyl acetate, as a diluting solvent, and 3.64 g of the epoxy resin curing agent solution A obtained in Production Example 1 were added and stirred. To this mixture, 1.13 g of an epoxy resin ("TETRAD-X", available from Mitsubishi Gas Chemical Co., Inc.) having a glycidylamino group derived from meta-xylylenediamine [(active hydrogen number in the epoxy resin curing agent)/(number of epoxy groups in the epoxy resin) = 1.2] as an epoxy resin was added and stirred. Thus, an epoxy resin composition A for forming a cured resin layer (III)-1 having a solid content concentration of 35 mass% was prepared.

### Production Example 4 (Preparation of Epoxy Resin Composition B)

1.56 g of methanol and 3.25 g of ethyl acetate, as a diluting solvent, and 4.83 g of the epoxy resin curing agent solution A obtained in Production Example 1 were added and stirred. To this mixture, 0.36 g of an epoxy resin ("TETRAD-X", available from Mitsubishi Gas Chemical Co., Inc.) having a glycidylamino group derived from meta-xylylenediamine [(active hydrogen number in the epoxy resin curing agent)/(number of epoxy groups in the epoxy resin) = 5.0] as an epoxy resin was added and stirred. Thus, an epoxy resin composition B for forming a cured resin layer (III)-2 having a solid content concentration of 35 mass% was prepared.

### Production Example 5 (Preparation of Epoxy Resin Composition C)

2.15 g of methanol and 3.25 g of ethyl acetate, as a diluting solvent, and 3.13 g of the epoxy resin curing agent solution A obtained in Production Example 1 were added and stirred. To this mixture, 1.46 g of an epoxy resin ("TETRAD-X", available from Mitsubishi Gas Chemical Co., Inc.) having a glycidylamino group derived from meta-xylylenediamine [(active hydrogen number in the epoxy resin curing agent)/(number of epoxy groups in the epoxy resin) = 0.8] as an epoxy resin was added and stirred. Thus, an epoxy resin composition C for forming a cured resin layer (III)-3 having a solid content concentration of 35 mass% was prepared.

### Production Example 6 (Preparation of Epoxy Resin Composition D)

8.83 g of ethanol, which was a diluting solvent, and 1.14 g of the epoxy resin curing agent solution B obtained in Production Example 2 were added and stirred. To this mixture, 0.03 g of an epoxy resin ("TETRAD-X", available from Mitsubishi Gas Chemical Co., Inc.) having a glycidylamino group derived from meta-xylylenediamine [(active hydrogen number in the epoxy resin curing agent)/(number of epoxy groups in the epoxy resin) = 3.0] as an epoxy resin was added and stirred. Thus, an epoxy resin composition D for forming a cured resin layer (III)-4 having a solid content concentration of 2 mass% was prepared.

### Example 1 (Production of Laminate and Recovery of Plastic Film)

### (Production of Laminate)

A laminate having a layer constitution listed in Table 1 was produced by the following procedure.

On one face of a biaxially oriented polypropylene film (OPP) ("FOR", available from Futamura Chemical Co., Ltd.; thickness: 25 µm), a white ink (obtained by subjecting "Bell Collar R115", available from Sakata Inx Corporation, to two fold dilution using a diluting solvent ("L solvent", available from Sakata Inx Corporation)) was applied by using a bar coater No. 8 and heated at 80°C for 10 seconds to dry the white ink (thickness after drying: approximately 0.5 µm), and thus a coloring layer was formed. On the coloring layer, a gravure ink for bottom printing (obtained by subjecting "BelleFlora R Medium", available from Sakata Inx Corporation, to two fold dilution using a diluting solvent ("K solvent", available from Sakata Inx Corporation)) was applied by using a bar coater No. 8 and heated at 80°C for 10 seconds to dry the gravure ink (thickness after drying: approximately 0.5 µm), and thus a medium layer was formed. In the following tables, the coloring layer and the medium layer were collectively referred to as "ink layer".

Then, on the medium layer, the epoxy resin composition A obtained in Production Example 3 was applied by using a bar coater No. 8 and dried by heating at 80°C for 10 seconds (thickness after drying: approximately 3 µm). The coated face of the epoxy resin composition and an aluminum vapor-deposited face of an aluminum vapor-deposited CPP in which aluminum was vapor-deposited on one face of a cast polypropylene film (CPP) ("S-F-1", available from Nakai Industrial Co., Ltd.; thickness: 25 µm) were adhered by nip rolls in a manner that the coated face and the aluminum vapor-deposited face were facing each other, and heated at 40°C for 2 days to form a cured resin layer (III)-1, and thus a laminate having a layer constitution listed in Table 1 was obtained.

### (Recovery and Evaluation of Plastic Film)

The produced laminate was cut into a 1.5 cm × 5 cm strip form, and one sheet of the strip-like laminate was soaked in 1 N-acetic acid aqueous solution (approximately 10 g) at 40°C for 16 hours. After the soaking, the laminate was recovered and subjected to the following evaluations.

### <Delamination Interface>

For the laminate recovered after the soaking in 1 N-acetic acid aqueous solution, visual observation was performed to determine in which interface of a layer the delamination occurred. The result is shown in Table 1. The "delamination interface" shown in Table 1 indicates that delamination occurred in an interface indicated by "//".

### <State of Vapor-Deposited Layer>

Occurrence of dissolution of the aluminum vapor-deposited layer in the laminate was visually observed. The result is shown in Table 1. In the table, a case where at least a part of the vapor-deposited layer was dissolved was indicated by "dissolved".

### <Separation of CPP>

The separation state of the CPP film from the laminate was evaluated based on the following criteria. The result is shown in Table 1.

### Evaluation Criteria

A: The CPP film was delaminated from the laminate, and no aluminum remained on a film surface as a result of elementary analysis performed by measuring the surface of the recovered CPP film by the scanning electron microscopy/energy-dispersive X-ray spectrometry (SEM-EDX).
B: The CPP film was delaminated from the laminate but aluminum remained on the recovered CPP film surface.
C: The CPP film was not delaminated and could not be recovered from the laminate. SEM-EDX Measurement Conditions

Used instrument: Scanning electron microscope "SU-8020", available from Hitachi High-Tech Corporation

### Measurement conditions:

Acceleration voltage 10 kV
Probe current 10 µA, High
Condenser lens 1 1
Operation distance 15 mm
Conductive treatment Au-Pd vapor deposition

### <Separation of OPP + Ink Layer>

For the separation state of the OPP film + the ink layer, the laminate recovered after the soaking in the 1 N-acetic acid aqueous solution was visually observed and evaluated based on the following criteria. The result is shown in Table 1.

### Evaluation Criteria

A: The OPP film + the ink layer was delaminated from the laminate, and the cured resin layer did not remain on the ink layer.
B: The OPP film + the ink layer was delaminated from the laminate but the cured resin layer remained on the ink layer.
C: The OPP film + the ink layer was delaminated from the laminate but the cured resin layer and a part of the vapor-deposited layer remained on the ink layer.
D: The OPP film + the ink layer was not delaminated and could not be recovered from the laminate.

### Examples 2 to 4

Each evaluation was performed by the same method as for Example 1 except for changing the aqueous solution used for soaking the laminate in Example 1 to an aqueous solution listed in Table 1. The results are shown in Table 1.

### Example 5

A laminate having a layer constitution listed in Table 1 was produced by the same method as for Example 1 except for using the epoxy resin composition B obtained in Production Example 4 in place of the epoxy resin composition A obtained in Production Example 3 used in Example 1, and evaluation was performed. The results are shown in Table 1.

### Examples 6 to 8

Evaluation was performed by the same method as for Example 5 except for changing the aqueous solution used for soaking the laminate in Example 5 to an aqueous solution listed in Table 1. The results are shown in Table 1.

### Comparative Example 1

A laminate having a layer constitution listed in Table 1 was produced by the same method as for Example 2 except for using a urethane adhesive ("TM-569/CAT-RT37", available from Toyo-Morton, Ltd.) in place of the epoxy resin composition A obtained in Production Example 3 used in Example 2, and evaluation was performed. The results are shown in Table 1.

### Comparative Examples 2 and 3

Evaluation was performed by the same method as for Comparative Example 1 except for changing the aqueous solution used for soaking the laminate in Comparative Example 1 to an aqueous solution listed in Table 1. The results are shown in Table 1.

### [Table 1]

**[Table 1]**

| | Laminate | | | Immersion aqueous solution * | Delamination interface | State of vapor-deposited layer | Separation of CPP | Separation of OPP+ ink layer |
|---|---|---|---|---|---|---|---|---|
| | Layer Constitution | Cured resin layer | | | | | | |
| | | Type | Thickness (µm) | | | | | |
| Example 1 | OPP/ink layer/cured resin layer (III)/AI vapor-deposited layer/CCP | (III)-1 | 3 | 1 N-acetic acid | Ink layer//cured resin layer (III)//AI vapor-deposited layer//CPP | Dissolved | A | A |
| Example 2 | OPP/ink layer/cured resin layer (III)/AI vapor-deposited layer/CCP | (III)-1 | 3 | 1 N-lactic acid | Ink layer//cured resin layer (III)//AI vapor-deposited layer//CPP | Dissolved | A | A |
| Example 3 | OPP/ink layer/cured resin layer (III)/AI vapor-deposited layer/CCP | (III)-1 | 3 | 1 N-citric acid | Ink layer//cured resin layer (III)//AI vapor-deposited layer | Not dissolved | B | A |
| Example 4 | OPP/ink layer/cured resin layer (III)/AI vapor-deposited layer/CCP | (III)-1 | 3 | 1 N-hydrocloric acid | Ink layer//cured resin layer (III)//AI vapor-deposited layer//CPP | Dissolved | A | A |
| Example 5 | OPP/ink layer/cured resin layer (III)/AI vapor-deposited layer/CCP | (III)-2 | 3 | 1 N-acetic acid | Ink layer//cured resin layer (III)//AI vapor-deposited layer//CPP | Dissolved | A | A |
| Example 6 | OPP/ink layer/cured resin layer (III)/AI vapor-deposited layer/CCP | (III)-2 | 3 | 1 N-lactic acid | Ink layer//cured resin layer (III)//AI vapor-deposited layer//CPP | Dissolved | A | A |
| Example 7 | OPP/ink layer/cured resin layer (III)/AI vapor-deposited layer/CCP | (III)-2 | 3 | 1 N-citric acid | Ink layer//cured resin layer (III)//AI vapor-deposited layer//CPP | Not dissolved | B | A |
| Exemple 8 | OPP/ink layer/cured resin layer (III)/AI vapor-deposited layer/CCP | (III)-2 | 3 | 1 N-hydrocloric acid | Ink layer//cured resin layer (III)//AI vapor-deposited layer//CPP | Dissolved | A | A |
| Comparative Exemple 1 | OPP/ink layer/urethane adhesive layer /AI vapor-deposited layer/CCP | Urethane adhesive layer | 3 | 1 N-lactic acid | Not delaminated | Not dissolved | C | D |
| Comparative Exemple 2 | OPP/ink layer/urethane adhesive layer /AI vapor-deposited layer/CCP | Urethane adhesive layer | 3 | 1 N-citric acid | Not delaminated | Not dissolved | C | D |
| Comparative Exemple 3 | OPP/ink layer/urethane adhesive layer /AI vapor-deposited layer/CCP | Urethane adhesive layer | 3 | 1 N-hydrocloric acid | Not delaminated | Slightly dissolved only around a pheripheral portion | C | D |

| | | | | | | | | |
|---|---|---|---|---|---|---|---|---|
| * 1 N-acetic acid: pH 2.26, 1 N-lactic acid: pH 1.8, 1 N-citric acid: pH 1.75, 1 N-hydrochloric acid: pH 0.22 (all values are at 25°C) | | | | | | | | |

From Table 1, it was clear that the CPP film and the OPP film + ink layer were able to be separated when the laminate including the OPP film and the CPP film, the aluminum vapor-deposited layer, and the predetermined cured resin layer (III) was soaked in the acid aqueous solution (Examples 1 to 8). Especially in Examples 1, 2, 4 to 6, and 8, in which the laminate was soaked in a 1 N-acetic acid aqueous solution, 1 N-lactic acid aqueous solution, or 1 N-hydrochloric acid, the vapor-deposited layer did not remain on the CPP film, which was advantageous for recovery of the CPP film. On the other hand, in Comparative Examples 1 to 3, separation of the plastic film was not possible.

### Example 9 (Production of Laminate and Recovery of Plastic Film)

### (Production of Laminate)

A laminate having a layer constitution listed in Table 2 was produced by the following procedure.

On an alumina vapor-deposited face of an alumina vapor-deposited PET in which alumina was vapor-deposited on one face of a biaxially oriented polyethylene terephthalate film (PET) ("Barrialox 1011HG", available from Toray Advanced Film Co., Ltd.; thickness: 12 µm), a white ink (obtained by subjecting "Bell Collar R115", available from Sakata Inx Corporation, to two fold dilution using a diluting solvent ("L solvent", available from Sakata Inx Corporation)) was applied by using a bar coater No. 8 and heated at 80°C for 10 seconds to dry the white ink (thickness after drying: approximately 0.5 µm), and thus a coloring layer was formed. On the coloring layer, a gravure ink for bottom printing (obtained by subjecting "BelleFlora R Medium", available from Sakata Inx Corporation, to two fold dilution using a diluting solvent ("K solvent", available from Sakata Inx Corporation)) was applied by using a bar coater No. 8 and heated at 80°C for 10 seconds to dry the gravure ink (thickness after drying: approximately 0.5 µm), and thus a medium layer was formed.

Then, on the medium layer, the epoxy resin composition C obtained in Production Example 5 was applied by using a bar coater No. 8 and dried by heating at 80°C for 10 seconds (thickness after drying: approximately 3 µm). The coated face of the epoxy resin composition and a cast polypropylene film (CPP) ("PYLEN Film-CT P1146", available from Toyobo Co., Ltd.; thickness: 50 µm) were adhered by nip rolls in a manner that the coated face and the cast polypropylene film were facing each other, and heated at 40°C for 2 days to form a cured resin layer (III)-3, and thus a laminate having a layer constitution listed in Table 2 was obtained.

### (Recovery and Evaluation of Plastic Film)

The produced laminate was cut into a 1.5 cm × 5 cm strip form, and one sheet of the strip-like laminate was soaked in 1 N-acetic acid aqueous solution (approximately 10 g) at 40°C for 16 hours. After the soaking, the laminate was recovered and subjected to the following evaluations.

### <Delamination Interface, State of Vapor-Deposited Layer>

Evaluation was performed by the same method as in Example 1.

### <Separation of PET>

The separation state of the PET film from the laminate was evaluated based on the following criteria. The result is shown in Table 2. The SEM-EDX measurement conditions are the same as the measurement conditions described above.

### Evaluation Criteria

A: The PET film was delaminated from the laminate, and no alumina remained on a film surface as a result of elementary analysis performed by measuring the surface of the recovered PET film by the SEM-EDX.
B: The PET film was delaminated from the laminate but alumina remained on the recovered PET film surface.
C: The PET film was not delaminated and could not be recovered from the laminate.

### <Separation of CPP + Cured Resin Layer>

For the separation state of the CPP + the cured resin layer, the laminate recovered after the soaking in the 1 N-acetic acid aqueous solution was visually observed and evaluated based on the following criteria. The result is shown in Table 2.

### Evaluation Criteria

A: The CPP film + the cured resin layer was delaminated from the laminate, and the ink layer did not remain on the cured resin layer.
B: The CPP film + the cured resin layer was delaminated from the laminate but the ink layer remained on the cured resin layer.
C: The CPP film + the cured resin layer was not delaminated and could not be recovered from the laminate.

### Examples 10 and 11

Evaluation was performed by the same method as for Example 9 except for changing the aqueous solution used for soaking the laminate in Example 9 to an aqueous solution listed in Table 2. The results are presented in Table 2.

### Comparative Example 4

A laminate having a layer constitution listed in Table 2 was produced by the same method as for Example 9 except for using a urethane adhesive ("TM-569/CAT-RT37", available from Toyo-Morton, Ltd.) in place of the epoxy resin composition C obtained in Production Example 5 used in Example 9, and evaluation was performed. The results are presented in Table 2.

### Comparative Examples 5 and 6

Evaluation was performed by the same method as for Comparative Example 4 except for changing the aqueous solution used for soaking the laminate in Comparative Example 4 to an aqueous solution listed in Table 2. The results are presented in Table 2.

### [Table 2]

**Table 2**

| | Laminate | | | Immersion aqueous solution | Delamination interface | State of vapor-deposited layer | Separation of PET | Separation of CPP + cured resin layer |
|---|---|---|---|---|---|---|---|---|
| | Layer Constitution | Cured resin layer | | | | | | |
| | | Type | Thickness (µm) | | | | | |
| Example 9 | PET/Al₂Ox vapor-deposited layer/ink layer/cured resin layer (III)/CPP | (III)-3 | 3 | 1 N-acetic acid | PET//Al₂Ox vapor-deposited layer//ink layer//cured resin layer (III) | Dissolved | A | A |
| Example 10 | PET/Al₂Ox vapor-deposited layer/ink layer/cured resin layer (III)/CPP | (III)-3 | 3 | 1 N-lactic acid | PET//Al₂Ox vapor-deposited layer//ink layer//cured resin layer (III) | Dissolved | A | A |
| Example 11 | PET/Al₂Ox vapor-deposited layer/ink | (III)-3 | 3 | 1 N-hydrochloric acid | PET//Al₂Ox vapor-deposited layer//ink layer | Dissolved | A | B |
| | layer/cured resin layer (III)/CPP | | | | | | | |
| Comparative Example 4 | PET/Al₂Ox vapor-deposited layer/ink layer/urethane adhesive layer/CPP | Urethane adhesive layer | 3 | 1 N-acetic acid | Not delaminated | Not dissolved | C | C |
| Comparative Example 5 | PET/Al₂Ox vapor-deposited layer/ink layer/urethane adhesive layer/CPP | Urethane adhesive layer | 3 | 1 N-lactic acid | Not delaminated | Not dissolved | C | C |
| Comparative Example 6 | PET/Al₂Ox vapor-deposited layer/ink layer/urethane adhesive layer/CPP | Urethane adhesive layer | 3 | 1 N-hydrochloric acid | Not delaminated | Not dissolved | C | C |

### Example 12 (Production of Laminate and Recovery of Plastic Film)

### (Production of Laminate)

A laminate having a layer constitution listed in Table 3 was produced by the following procedure.

On a silica vapor-deposited face of a silica vapor-deposited PET in which silica was vapor-deposited on one face of a biaxially oriented polyethylene terephthalate film (PET) ("TECHBARRIER L", available from Mitsubishi Chemical Corporation; thickness: 12 µm), the epoxy resin composition A obtained in Production Example 3 was applied by using a bar coater No. 8 and dried by heating at 80°C for 10 seconds (thickness after drying: approximately 3 µm). The coated face of the epoxy resin composition and a cast polypropylene film (CPP) ("PYLEN Film-CT P1146", available from Toyobo Co., Ltd.; thickness: 25 µm) were adhered by nip rolls in a manner that the coated face and the cast polypropylene film were facing each other, and heated at 40°C for 2 days to form a cured resin layer (III)-1, and thus a laminate having a layer constitution listed in Table 3 was obtained.

### (Recovery and Evaluation of Plastic Film)

The produced laminate was cut into a 1.5 cm × 5 cm strip form, and one sheet of the strip-like laminate was soaked in 1 N-acetic acid aqueous solution (approximately 10 g) at 40°C for 16 hours. After the soaking, the laminate was recovered and subjected to the following evaluations.

### <Delamination Interface, State of Vapor-Deposited Layer>

Evaluation was performed by the same method as in Example 1.

### <Separation of PET>

The separation state of the PET film from the laminate was evaluated based on the following criteria. The result is shown in Table 3. The SEM-EDX measurement conditions are the same as the measurement conditions described above.

### Evaluation Criteria

A: The PET film was delaminated from the laminate, and no silica remained on a film surface as a result of elementary analysis performed by measuring the surface of the recovered PET film by the SEM-EDX.
B: The PET film was delaminated from the laminate but silica remained on the recovered PET film surface.
C: The PET film was not delaminated and could not be recovered from the laminate.

### <Separation of CPP + Cured Resin Layer>

For the separation state of the CPP + the cured resin layer, the laminate recovered after the soaking in the 1 N-acetic acid aqueous solution was visually observed and evaluated based on the following criteria. The result is shown in Table 2.

### Evaluation Criteria

A: The CPP film + the cured resin layer was delaminated from the laminate.
C: The CPP film + the cured resin layer was not delaminated and could not be recovered from the laminate.

### Examples 13 and 14

Each evaluation was performed by the same method as for Example 12 except for changing the aqueous solution used for soaking the laminate in Example 12 to an aqueous solution listed in Table 3. The results are presented in Table 3.

### Comparative Example 7

A laminate having a layer constitution listed in Table 3 was produced by the same method as for Example 12 except for using a urethane adhesive ("TM-569/CAT-RT37", available from Toyo-Morton, Ltd.) in place of the epoxy resin composition A obtained in Production Example 3 used in Example 12, and evaluation was performed. The results are presented in Table 3.

### Comparative Examples 8 and 9

Evaluation was performed by the same method as for Comparative Example 7 except for changing the aqueous solution used for soaking the laminate in Comparative Example 7 to an aqueous solution listed in Table 3. The results are presented in Table 3.

### [Table 3]

**Table 3**

| | Laminate | | | Immersion aqueous solution | Delamination interface | State of vapor-deposited layer | Separation of PET | Separation of CPP + cured resin layer |
|---|---|---|---|---|---|---|---|---|
| | Layer Constitution | Cured resin layer | | | | | | |
| | | Type | Thickness (µm) | | | | | |
| Example 12 | PET/SiOx vapor-deposited layer/cured resin layer (III)/CPP | (III)-1 | 3 | 1 N-acetic acid | SiOx vapor-deposited layer//cured resin layer (III) | Dissolved | B | A |
| Example 13 | PET/SiOx vapor-deposited layer/cured resin layer (III)/CPP | (III)-1 | 3 | 1 N-lactic acid | SiOx vapor-deposited layer//cured resin layer (III) | Dissolved | B | A |
| Example 14 | PET/SiOx vapor-deposited layer/cured resin layer (III)/CPP | (III)-1 | 3 | 1 N-citric acid | SiOx vapor-deposited layer//cured resin layer (III) | Dissolved | B | A |
| Comparative Example 7 | PET/SiOx vapor-deposited layer/urethane adhesive layer/CPP | Urethane adhesive layer | 3 | 1 N-acetic acid | Not delaminated | Not dissolved | C | C |
| Comparative Example 8 | PET/SiOx vapor-deposited layer/urethane adhesive layer/CPP | Urethane adhesive layer | 3 | 1 N-lactic acid | Not delaminated | Not dissolved | C | C |
| Comparative Example 9 | PET/SiOx vapor-deposited layer/urethane adhesive layer/CPP | Urethane adhesive layer | 3 | 1 N-citric acid | Not delaminated | Not dissolved | C | C |

### Example 15 (Production of Laminate and Recovery of Plastic Film)

### (Production of Laminate)

A laminate having a layer constitution listed in Table 4 was produced by the following procedure.

On one face of a biaxially oriented polypropylene film (OPP) ("FOR", available from Futamura Chemical Co., Ltd.; thickness: 25 µm), the epoxy resin composition A obtained in Production Example 3 was applied by using a bar coater No. 8 and dried by heating at 80°C for 10 seconds (thickness after drying: approximately 3 µm). The coated face of the epoxy resin composition and an aluminum vapor-deposited face of an aluminum vapor-deposited CPP in which aluminum was vapor-deposited on one face of a cast polypropylene film (CPP) ("S-F-1", available from Nakai Industrial Co., Ltd.; thickness: 25 µm) were adhered by nip rolls in a manner that the coated face and the aluminum vapor-deposited face were facing each other, and heated at 40°C for 2 days to form a cured resin layer (III)-1, and thus a laminate having a layer constitution listed in Table 4 was obtained.

### (Recovery and Evaluation of Plastic Film)

The produced laminate was cut into a 1.5 cm × 5 cm strip form, and one sheet of the strip-like laminate was soaked in 1 N-hydrochloric acid (approximately 10 g) at 23°C for 96 hours. After the soaking, the laminate was recovered and subjected to the following evaluations.

### <Delamination Interface, State of Vapor-Deposited Layer>

Evaluation was performed by the same method as in Example 1.

### <Separation of CPP>

Evaluation was performed by the same method as in Example 1.

### <Separation of OPP + Cured Resin Layer>

For the separation state of the OPP film + the cured resin layer, the laminate recovered after the soaking in the 1 N-hydrochloric acid was visually observed and evaluated based on the following criteria. The result is shown in Table 4.

### Evaluation Criteria

A: The OPP film + the cured resin layer was delaminated from the laminate.
C: The OPP film + the cured resin layer was not delaminated and could not be recovered from the laminate.

### Example 16

Evaluation was performed by the same method as for Example 15 except for changing the aqueous solution used for soaking the laminate in Example 15 to a 5%-KOH aqueous solution (pH at 25°C: 14.7). The results are presented in Table 4.

### Example 17 (Production of Laminate and Recovery of Plastic Film)

### (Production of Laminate)

A laminate having a layer constitution listed in Table 4 was produced by the following procedure.

On an aluminum vapor-deposited face of an aluminum vapor-deposited CPP in which aluminum was vapor-deposited on one face of a cast polypropylene film (CPP) ("S-F-1", available from Nakai Industrial Co., Ltd.; thickness: 25 µm), the epoxy resin composition D obtained in Production Example 6 was applied by using a bar coater No. 3 and dried by heating at 80°C for 30 seconds (thickness after drying: approximately 0.1 µm).

Then, on one face of a biaxially oriented polypropylene film (OPP) ("FOR", available from Futamura Chemical Co., Ltd.; thickness: 25 µm), a urethane adhesive ("TM-569/CAT-RT37", available from Toyo-Morton, Ltd.) was applied by using a bar coater No. 8 and dried by heating at 80°C for 10 seconds (thickness after drying: approximately 3 µm). The coated face of the epoxy resin composition and the urethane adhesive layer were adhered by nip rolls in a manner that the coated face and the urethane adhesive layer were facing each other, and heated at 40°C for 2 days to form a cured resin layer (III)-4, and thus a laminate having a layer constitution listed in Table 4 was obtained.

### (Recovery and Evaluation of Plastic Film)

The produced laminate was cut into a 1.5 cm × 5 cm strip form, and one sheet of the strip-like laminate was soaked in 1 N-hydrochloric acid (approximately 10 g) at 23°C for 96 hours. After the soaking, the laminate was recovered and subjected to evaluations the same as those of Example 12. The results are presented in Table 4.

### Example 18

Evaluation was performed by the same method as for Example 17 except for changing the aqueous solution used for soaking the laminate in Example 17 to a 5%-KOH aqueous solution (pH at 25°C: 14.7). The results are presented in Table 4.

### [Table 4]

**Table 4**

| | Laminate | | | Immersion aqueous solution | Delamination interface | State of vapor-deposited layer | Separation of CPP | Separation of OPP + cured resin layer |
|---|---|---|---|---|---|---|---|---|
| | Layer Constitution | Cured resin layer | | | | | | |
| | | Type | Thickness (µm) | | | | | |
| Example 15 | OPP/cured resin layer (III)/Al vapor-deposited layer/CPP | (III)-1 | 3 | 1 N-hydrochloric acid | Cured resin layer (III)//Al vapor-deposited layer//CPP | Dissolved | A | A |
| Example 16 | OPP/cured resin layer (III)/Al vapor-deposited layer/CPP | (III)-1 | 3 | 5%-KOH | Cured resin layer (III)//Al vapor-deposited layer//CPP | Dissolved | A | A |
| Example 17 | OPP/urethane adhesive layer/cured resin layer (III)/Al vapor-deposited layer/CPP | Urethane adhesive layer + (III)-4 | 0.1 | 1 N-hydrochloric acid | Cured resin layer (III)//Al vapor-deposited layer//CPP | Dissolved | A | B |
| Example 18 | OPP/urethane adhesive layer/cured resin layer (III)/Al vapor-deposited layer/CPP | Urethane adhesive layer + (III)-4 | 0.1 | 5%-KOH | Cured resin layer (III)//Al vapor-deposited layer//CPP | Dissolved | A | B |

From Tables 2 to 4, according to the method of the present invention, a plastic film can be separated by the acid aqueous solution or the alkaline aqueous solution even when a laminate having a different layer constitution is used.

### Example 19 (Production of Laminate and Recovery of Plastic Film)

### (Production of Laminate)

A laminate having a layer constitution listed in Table 5 was produced by the following procedure.

On a silica vapor-deposited face of a silica vapor-deposited PET in which silica was vapor-deposited on one face of a polyethylene terephthalate film (PET) ("TECHBARRIER L", available from Mitsubishi Chemical Corporation; thickness: 12 µm), the epoxy resin composition A obtained in Production Example 3 was applied by using a bar coater No. 8 and dried by heating at 80°C for 10 seconds (thickness after drying: approximately 3 µm). The coated face of the epoxy resin composition and a vapor-deposited face of a binary vapor-deposited PET sealant film in which a binary vapor-deposited layer of silica-alumina was formed on one face of a PET sealant ("VE034", available from Toyobo Co., Ltd.; thickness: 30 µm) were adhered by nip rolls in a manner that the coated face and the vapor-deposited layer face were facing each other, and heated at 40°C for 2 days to form a cured resin layer (III)-1, and thus a laminate having a layer constitution listed in Table 5 was obtained.

### (Recovery and Evaluation of Plastic Film)

The produced laminate was cut into a 1.5 cm × 5 cm strip form, and one sheet of the strip-like laminate was soaked in 5%-KOH aqueous solution (approximately 10 g) at 40°C for 16 hours. After the soaking, the laminate was recovered and subjected to the following evaluations.

### <Delamination Interface, State of Vapor-Deposited Layer>

Evaluation was performed by the same method as in Example 1.

### <Separation of PET>

The separation state of the PET film from the laminate was evaluated based on the following criteria. The result is shown in Table 5. The SEM-EDX measurement conditions are the same as the measurement conditions described above.

### Evaluation Criteria

A: The PET film was delaminated from the laminate, and no silica remained on a film surface as a result of elementary analysis performed by measuring the surface of the recovered PET film by the SEM-EDX.
B: The PET film was delaminated from the laminate but silica remained on the recovered PET film surface.
C: The PET film was not delaminated and could not be recovered from the laminate.

### <Separation of PET Sealant>

The separation state of the PET sealant from the laminate was evaluated based on the following criteria. The result is shown in Table 5.

### Evaluation Criteria

A: The PET sealant was delaminated from the laminate, and no binary vapor-deposited layer remained on a sealant surface as a result of elementary analysis performed by measuring the surface of the recovered PET sealant by the SEM-EDX.
B: The PET sealant was delaminated from the laminate but binary vapor-deposited layer remained on the recovered PET sealant surface.
C: The PET sealant was not delaminated and could not be recovered from the laminate.

### Examples 20 to 22

Evaluation was performed by the same method as for Example 19 except for changing the aqueous solution used for soaking the laminate in Example 19 to an aqueous solution listed in Table 5. The results are shown in Table 5.

### Comparative Example 10

A laminate having a layer constitution listed in Table 5 was produced by the same method as for Example 19 except for using a urethane adhesive ("TM-569/CAT-RT37", available from Toyo-Morton, Ltd.) in place of the epoxy resin composition A obtained in Production Example 3 used in Example 19, and evaluation was performed. The results are shown in Table 5.

### Comparative Examples 11 to 13

Evaluation was performed by the same method as for Comparative Example 10 except for changing the aqueous solution used for soaking the laminate in Comparative Example 10 to an aqueous solution listed in Table 5. The results are shown in Table 5.

### [Table 5]

**Table 5**

| | Laminate | | | Immersion aqueous solution | Delamination interface | State of vapor-deposited layer | Separation of PET | Separation of PET sealant |
|---|---|---|---|---|---|---|---|---|
| | Layer Constitution | Cured resin layer | | | | | | |
| | | Type | Thickness (µm) | | | | | |
| Example 19 | PET/SiOx vapor-deposited layer/cured resin layer (III)/binary vapor-deposited layer/PET sealant | (III)-1 | 3 | 5%-KOH | PET//SiOx vapor-deposited layer//cured resin layer (III)//binary vapor-deposited layer//PET sealant | Both dissolved | A | A |
| Example 20 | PET/SiOx vapor-deposited layer/cured resin layer (III)/binary vapor-deposited layer/PET sealant | (III)-1 | 3 | 1 N-hydrochloric acid | SiOx vapor-deposited layer//cured resin layer (III)//binary vapor-deposited layer | Both dissolved | B | B |
| Example 21 | PET/SiOx vapor-deposited layer/cured resin layer (III)/binary vapor-deposited layer/PET sealant | (III)-1 | 3 | 1 N-acetic acid | SiOx vapor-deposited layer//cured resin layer (III)//binary vapor-deposited layer | Both dissolved | B | B |
| Example 22 | PET/SiOx vapor-deposited layer/cured resin layer (III)/binary vapor-deposited layer/PET sealant | (III)-1 | 3 | 1 N-lactic acid | SiOx vapor-deposited layer//cured resin layer (III)//binary vapor-deposited layer | Both dissolved | B | B |
| Comparative Example 10 | PET/SiOx vapor-deposited layer/urethane adhesive/binary vapor-deposited layer/PET sealant | Urethane adhesive | 3 | 5%-KOH | Delaminated only around a peripheral portion | | C | C |
| Comparative Example 11 | PET/SiOx vapor-deposited layer/urethane adhesive/binary vapor-deposited layer/PET sealant | Urethane adhesive | 3 | 1 N-hydrochloric acid | Not delaminated | Not dissolved | C | C |
| Comparative Example 12 | PET/SiOx vapor-deposited layer/urethane adhesive/binary vapor-deposited layer/PET sealant | Urethane adhesive | 3 | 1 N-acetic acid | Not delaminated | Not dissolved | C | C |
| Comparative Example 13 | PET/SiOx vapor-deposited layer/urethane adhesive/binary vapor-deposited layer/PET sealant | Urethane adhesive | 3 | 1 N-lactic acid | Not delaminated | Not dissolved | C | C |

### Example 23 (Production of Laminate and Recovery of Plastic Film)

### Production of Laminate

A laminate having a layer constitution listed in Table 6 was produced by the same method as for Example 19 except for using a PET sealant film ("HS-PET (C)", available from Nissei Chemical Co., Ltd.) in place of the binary vapor-deposited PET sealant film in Example 19.

### Recovery and Evaluation of Plastic Film

The produced laminate was cut into a 1.5 cm × 5 cm strip form, and one sheet of the strip-like laminate was soaked in 5%-KOH aqueous solution (approximately 10 g) at 40°C for 96 hours. After the soaking, the laminate was recovered and subjected to the following evaluations.

### <Delamination Interface, State of Vapor-Deposited Layer>

Evaluation was performed by the same method as in Example 1.

### <Separation of PET>

The separation state of the PET film from the laminate was evaluated based on the following criteria. The result is shown in Table 6. The SEM-EDX measurement conditions are the same as the measurement conditions described above.

### Evaluation Criteria

A: The PET film was delaminated from the laminate, and no silica remained on a film surface as a result of elementary analysis performed by measuring the surface of the recovered PET film by the SEM-EDX.
B: The PET film was delaminated from the laminate but silica remained on the recovered PET film surface.
C: The PET film was not delaminated and could not be recovered from the laminate.

### <Separation of PET Sealant + Cured Resin Layer>

For the separation state of the PET sealant + the cured resin layer, the laminate recovered after the soaking in the 5%-KOH aqueous solution was visually observed and evaluated based on the following criteria. The result is shown in Table 6.

### Evaluation Criteria

A: The PET sealant + cured resin layer was delaminated from the laminate.
C: The PET sealant + cured resin layer was not delaminated and could not be recovered from the laminate.

### Examples 24 to 26

Evaluation was performed by the same method as for Example 23 except for changing the aqueous solution used for soaking the laminate in Example 23 to an aqueous solution listed in Table 6. The result is shown in Table 6.

### Comparative Example 14

A laminate having a layer constitution listed in Table 6 was produced by the same method as for Example 24 except for using a urethane adhesive ("TM-569/CAT-RT37", available from Toyo-Morton, Ltd.) in place of the epoxy resin composition A obtained in Production Example 3 used in Example 24, and evaluation was performed. The result is shown in Table 6.

### Comparative Examples 15 and 16

Evaluation was performed by the same method as for Comparative Example 14 except for changing the aqueous solution used for soaking the laminate in Comparative Example 14 to an aqueous solution listed in Table 6. The result is shown in Table 6.

### [Table 6]

**Table 6**

| | Laminate | | | Immersion aqueous solution | Delamination interface | State of vapor-deposited layer | Separation of PET | Separation of PET sealant + cured resin layer |
|---|---|---|---|---|---|---|---|---|
| | Layer Constitution | Cured resin layer | | | | | | |
| | | Type | Thickness (µm) | | | | | |
| Example 23 | PET/SiOx vapor-deposited layer/cured resin layer (III)/PET sealant | (III)-1 | 3 | 5%-KOH | PET//SiOx vapor-deposited layer//cured resin layer (III) | Dissolved | A | A |
| Example 24 | PET/SiOx vapor-deposited layer/cured resin layer (III)/PET sealant | (III)-1 | 3 | 1 N-hydrochloric acid | SiOx vapor-deposited layer//cured resin layer (III) | Dissolved | B | A |
| Example 25 | PET/SiOx vapor-deposited layer/cured resin layer (III)/PET sealant | (III)-1 | 3 | 1 N-acetic acid | SiOx vapor-deposited layer//cured resin layer (III) | Dissolved | B | A |
| Example 26 | PET/SiOx vapor-deposited layer/cured resin layer (III)/PET sealant | (III)-1 | 3 | 1 N-lactic acid | SiOx vapor-deposited layer//cured resin layer (III) | Dissolved | B | A |
| Comparative Example 14 | PET/SiOx vapor-deposited layer/urethane adhesive/PET sealant | Urethane adhesive | 3 | 1 N-hydrochloric acid | Not delaminated | Not dissolved | C | C |
| Comparative Example 15 | PET/SiOx vapor-deposited layer/urethane adhesive/PET sealant | Urethane adhesive | 3 | 1 N-acetic acid | Not delaminated | Not dissolved | C | C |
| Comparative Example 16 | PET/SiOx vapor-deposited layer/urethane adhesive/PET sealant | Urethane adhesive | 3 | 1 N-lactic acid | Not delaminated | Not dissolved | C | C |

### Example 27 (Production of Laminate and Recovery of Plastic Film)

### (Production of Laminate)

A laminate having a layer constitution listed in Table 7 was produced by the following procedure.

On one face of a biaxially oriented polyethylene terephthalate film (PET) ("E5100", available from Toyobo Co., Ltd.; thickness: 12 µm), a white ink (obtained by subjecting "Bell Collar R115", available from Sakata Inx Corporation, to two fold dilution using a diluting solvent ("L solvent", available from Sakata Inx Corporation)) was applied by using a bar coater No. 8 and heated at 80°C for 10 seconds to dry the white ink (thickness after drying: approximately 0.5 µm), and thus a coloring layer was formed. On the coloring layer, a gravure ink for bottom printing (obtained by subjecting "BelleFlora R Medium", available from Sakata Inx Corporation, to two fold dilution using a diluting solvent ("K solvent", available from Sakata Inx Corporation)) was applied by using a bar coater No. 8 and heated at 80°C for 10 seconds to dry the gravure ink (thickness after drying: approximately 0.5 µm), and thus a medium layer was formed.

Then, on the medium layer, the epoxy resin composition A obtained in Production Example 3 was applied by using a bar coater No. 8 and dried by heating at 80°C for 10 seconds (thickness after drying: approximately 3 µm). The coated face of the epoxy resin composition and a vapor-deposited face of a binary vapor-deposited PET sealant film in which a binary vapor-deposited layer of silica-alumina was formed on one face of a PET sealant ("VE034", available from Toyobo Co., Ltd.; thickness: 30 µm) were adhered by nip rolls in a manner that the coated face and the vapor-deposited layer face were facing each other, and heated at 40°C for 2 days to form a cured resin layer (III)-1, and thus a laminate having a layer constitution listed in Table 7 was obtained.

### (Recovery and Evaluation of Plastic Film)

The produced laminate was cut into a 1.5 cm × 5 cm strip form, and one sheet of the strip-like laminate was soaked in 5%-KOH aqueous solution (approximately 10 g) at 40°C for 16 hours. After the soaking, the laminate was recovered and subjected to the following evaluations.

### <Delamination Interface, State of Vapor-Deposited Layer>

Evaluation was performed by the same method as in Example 1.

### <Separation of PET>

The separation state of the PET film from the laminate was evaluated based on the following criteria. The result is shown in Table 7. The SEM-EDX measurement conditions are the same as the measurement conditions described above.

### Evaluation Criteria

A: The PET film was delaminated from the laminate, and no ink layer remained on the recovered PET film surface.
B: The PET film was delaminated from the laminate but the ink layer remained on the recovered PET film surface.
C: The PET film was not delaminated and could not be recovered from the laminate.

### <Separation of PET Sealant>

The separation state of the PET sealant from the laminate was evaluated based on the following criteria. The result is shown in Table 7.

### Evaluation Criteria

A: The PET sealant was delaminated from the laminate, and no binary vapor-deposited layer remained on a sealant surface as a result of elementary analysis performed by measuring the surface of the recovered PET sealant by the SEM-EDX.
B: The PET sealant was delaminated from the laminate but binary vapor-deposited layer remained on the recovered PET sealant surface.
C: The PET sealant was not delaminated and could not be recovered from the laminate.

### Examples 28 to 31

Evaluation was performed by the same method as for Example 27 except for changing the aqueous solution used for soaking the laminate in Example 27 to an aqueous solution listed in Table 7. The results are shown in Table 7.

### Comparative Example 17

A laminate having a layer constitution listed in Table 7 was produced by the same method as for Example 27 except for using a urethane adhesive ("TM-569/CAT-RT37", available from Toyo-Morton, Ltd.) in place of the epoxy resin composition A obtained in Production Example 3 used in Example 27, and evaluation was performed. The results are shown in Table 7.

### Comparative Examples 18 to 21

Evaluation was performed by the same method as for Comparative Example 17 except for changing the aqueous solution used for soaking the laminate in Comparative Example 17 to an aqueous solution listed in Table 7. The results are shown in Table 7.

### [Table 7]

**Table 7**

| | Laminate | Cured resin layer | | | Delamination interface | State of vapor- deposited layer | Separation of PET | Separation of PET sealant |
|---|---|---|---|---|---|---|---|---|
| | Layer Constitution | | | | | | | |
| | | Type | Thickness (µm) | Immersion aqueous solution | | | | |
| Example 27 | PET/ink layer/cured resin layer (III)/binary vapor-deposited layer/PET sealant | (III)-1 | 3 | 5%-KOH | PET//ink layer/cured resin layer (III)//binary vapor-deposited layer//PET sealant | Dissolved | A | A |
| Example 28 | PET/ink layer/cured resin layer (III)/binary vapor-deposited layer/PET sealant | (III)-1 | 3 | 1 N-hydrochlori c acid | Ink layer//cured resin layer (III)//binary vapor-deposited layer | Dissolved | B | B |
| Example 29 | PET/ink layer/cured resin layer (III)/binary vapor-deposited layer/PET sealant | (III)-1 | 3 | 1 N-acetic acid | Ink layer//cured resin layer (III)//binary vapor-deposited layer | Dissolved | B | B |
| Example 30 | PET/ink layer/cured resin layer (III)/binary vapor-deposited layer/PET sealant | (III)-1 | 3 | 1 N-lactic acid | Ink layer//cured resin layer (III)//binary vapor-deposited layer | Dissolved | B | B |
| Example 31 | PET/ink layer/cured resin layer (III)/binary vapor-deposited layer/PET sealant | (III)-1 | 3 | 1 N-citric acid | Ink layer//cured resin layer (III)//binary vapor-deposited layer | Dissolved | B | B |
| Comparative Example 17 | PET/ink layer/urethane adhesive/binary vapor-deposited layer/PET sealant | Urethane adhesive | 3 | 5%-KOH | Delaminated only around a peripheral portion | - | C | C |
| Comparative Example 18 | PET/ink layer/urethane adhesive/binary vapor-deposited layer/PET sealant | Urethane adhesive | 3 | 1 N-hydrochlori c acid | Not delaminated | Not dissolved | C | C |
| Comparative Example 19 | PET/ink layer/urethane adhesive/binary vapor-deposited layer/PET sealant | Urethane adhesive | 3 | 1 N-acetic acid | Not delaminated | Not dissolved | C | C |
| Comparative Example 20 | PET/ink layer/urethane adhesive/binary vapor-deposited layer/PET sealant | Urethane adhesive | 3 | 1 N-lactic acid | Not delaminated | Not dissolved | C | C |
| Comparative Example 21 | PET/ink layer/urethane adhesive/binary vapor-deposited layer/PET sealant | Urethane adhesive | 3 | 1 N-citric acid | Not delaminated | Not dissolved | C | C |

From Tables 5 to 7, according to the method of the present invention, a plastic film (PET or PET sealant) can be separated by the acid aqueous solution or the alkaline aqueous solution even when a laminate having a different layer constitution is used. Furthermore, it was found that, in a case where the vapor-deposited layer in the laminate contains silica, the laminate is preferably brought into contact with the alkaline aqueous solution.

### Example 32 (Recovery of Plastic Film by Actual Equipment)

Using a laminate having a layer constitution of Example 1 (OPP/ink layer/cured resin layer (III)/Al vapor-deposited layer/CPP), a plastic film was recovered by the following method.

The laminate was ground by charging the laminate having a layer structure of Example 1 (roll film having a width of 300 mm) in a dry grinder having a stationary blade and a rotary blade and equipped with a screen having a mesh size of 12 mm. The shape of the laminate after grinding was as shown in FIG. 1.

In a 500 mL separable flask, 300 mL of 1 N-lactic acid aqueous solution was charged and heated to 75°C by using an oil bath. After the temperature was increased to 75°C, 10 g of the laminate after the grinding was charged in the flask and stirred at 240 rpm for 1 hour by using a stirring blade. Note that it was confirmed that the aluminum vapor-deposited layer was completely dissolved when stirring was performed for 30 minutes.

After 1 hour of the stirring, the flask was taken out from the oil bath, and while the flask was allowed to cool, stirring was performed for 1 hour. After completion of the stirring, the separated cured resin layer deposited in a bottom part of the flask, the OPP/ink layer and the CPP film floated on the aqueous solution surface, and the OPP/ink layer and the CPP film were easily recovered.

The recovered films were charged in 500 mL of water and washed by stirring at room temperature at a steering speed of 300 rpm for 1 hour. When the OPP/ink layer and the CPP film after the washing was analyzed by SEM-EDX, presence of the aluminum vapor-deposited layer was not confirmed.

Furthermore, when a recovery test of a plastic film was performed again by the aforementioned same method using the lactic acid aqueous solution after the cured resin layer and the film were recovered, the same results as those described above was achieved. Based on this, it can be said that the lactic acid aqueous solution can be repeatedly used.

### Industrial Applicability

According to the method of the present invention, a plastic film can be recovered efficiently from a laminate including a plastic film. The method of the present invention has a high degree of freedom in recovery conditions of the plastic film and, especially, facilitates recovery of a plastic film from a laminate in a form of laminate having two or more sheets of plastic films.

## Claims

1. A method for recovering a plastic film from a laminate,
the laminate comprising:
a plastic film (I);
an inorganic layer (II) comprising at least one selected from the group consisting of silicon oxide, aluminum, and aluminum oxide; and
a cured resin layer (III),
wherein the cured resin layer (III) is a cured product of an epoxy resin composition comprising an epoxy resin and an epoxy resin curing agent, the epoxy resin curing agent containing an amine-based curing agent; and
the method comprising bringing the laminate into contact with an acid aqueous solution or an alkaline aqueous solution.

2. The method according to claim 1, wherein the amine-based curing agent comprises the following amine-based curing agent (i):
(i) a reaction product of the following component (A) and the component (B):
(A) at least one selected from the group consisting of meta-xylylenediamine and para-xylylenediamine; and
(B) at least one selected from the group consisting of unsaturated carboxylic acids represented by the following general Formula (1) and derivatives thereof: 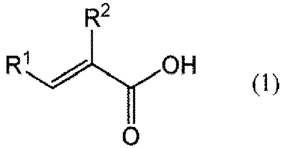
where, in Formula (1), R¹ and R² each independently represent a hydrogen atom, an alkyl group having from 1 to 8 carbons, an aryl group having from 6 to 12 carbons, or an aralkyl group having from 7 to 13 carbons.

3. The method according to claim 1 or 2, wherein the inorganic layer (II) is an inorganic vapor-deposited layer.

4. The method according to any one of claims 1 to 3, wherein the inorganic layer (II) is an aluminum vapor-deposited layer.

5. The method according to any one of claims 1 to 4, wherein the laminate comprises two or more plastic films (I).

6. The method according to any one of claims 1 to 5, wherein a ratio of an active hydrogen number in the epoxy resin curing agent to a number of epoxy groups in the epoxy resin (active hydrogen number in epoxy resin curing agent/number of epoxy groups in epoxy resin) in the epoxy resin composition is in a range of from 0.2 to 8.0.

7. The method according to any one of claims 1 to 6, wherein a thickness of the cured resin layer (III) is from 0.05 to 20 µm.

8. The method according to any one of claims 1 to 7, wherein the laminate further comprises an ink layer.

9. The method according to any one of claims 1 to 8, wherein the method comprises soaking the laminate in an acid aqueous solution.
